# EUROPEAN PATENT APPLICATION

(11) **EP 4 800 529 A1**
(43) Date of publication of application: **02.09.2026**
(21) Application number: 25797690.2
(22) Date of filing: 28.04.2025
(51) Int. Cl.: G06F 3/01, H04W 4/80, G06F 3/048, G06F 3/041, G06N 20/00, G01P 15/00

(54) **ELECTRONIC DEVICE AND CONTROL METHOD THEREOF**

(30) Priority: 29.04.2024 KR 20240057227
(71) Applicant: Samsung Electronics Co., Ltd., Suwon-si, Gyeonggi-do 16677 (KR)
(72) Inventor: HA, Jaehyeok, Suwon-si Gyeonggi-do 16677 (KR); PARK, Sihyun, Suwon-si Gyeonggi-do 16677 (KR); BAEK, Hojun, Suwon-si Gyeonggi-do 16677 (KR); SONG, Minjin, Suwon-si Gyeonggi-do 16677 (KR)
(74) Representative: Appleyard Lees IP LLP
(86) International application number: PCT/KR2025/005705
(87) International publication number: WO 2025/230252

(57) **Abstract**

An electronic device comprises: a sensor configured to detect a movement of at least one of an external device or a user; a communication circuit configured to communicate with at least one of the external device; at least one processor; and memory configured to store at least one operation scenario and one or more instructions, wherein the at least one processor is configured to: identify whether a trigger event occurs based on a detection value of the sensor, based on identifying that the trigger event has occurred, identify an operation scenario from the at least one operation scenario based on at least one of a number of occurrences of the trigger event, identifying whether the electronic device comprises a display device, or mirroring information associated with the external device obtained through the communication circuit, and control at least one of the communication circuit or the display device based on the identified operation scenario.

## Description

### [Technical Field]

The present disclosure relates to an electronic device and a control method thereof.

### [Background Art]

Recently, there has been active demand and research on technology (e.g., 'mirroring technology') that may allow an electronic device to be linked with other external electronic devices so that a function performed by the external electronic device may be performed on the electronic device, or so that a screen displayed on the external electronic device may be displayed on the electronic device.

In an Internet of Things (IoT) environment, a plurality of electronic devices may mirror each other.

For example, an electronic device may begin mirroring another external electronic device based on receiving a user input instructing the electronic device to start mirroring, or an electronic device may begin mirroring based on the occurrence of a specific event rather than a user input. However, this may require user intervention or a determination about whether a specific event has occurred, which may result in a problem in that the practical usability of mirroring technology is low.

In addition, as functions performed by the electronic device become more diverse, the need to accurately determine whether to perform mirroring of other external electronic devices while the electronic device performs the original function, may be increased.

### [Disclosure]

### [Technical Problem]

The present disclosure is directed to providing an electronic device capable of improving a user experience by accurately determining whether a predetermined condition for initiating mirroring is satisfied and by performing mirroring to an external device accordingly, without requiring a user to operate the electronic device.

### [Technical Solution]

One aspect of the present disclosure provides an electronic device including An electronic device comprising: a sensor configured to detect a movement of at least one of an external device or a user; a communication circuit configured to communicate with at least one of the external device; at least one processor; and memory configured to store at least one operation scenario and one or more instructions, wherein the at least one processor is configured to: identify whether a trigger event occurs based on a detection value of the sensor, based on identifying that the trigger event has occurred, identify an operation scenario from the at least one operation scenario based on at least one of a number of occurrences of the trigger event, identifying whether the electronic device comprises a display device, or mirroring information associated with the external device obtained through the communication circuit, and control at least one of the communication circuit or the display device based on the identified operation scenario.

Another aspect of the present disclosure provides a control method of an electronic device configured to display a mirroring content regarding an external device by mirroring the external device, the control method including identifying whether a trigger event occurs based on a detection value of a sensor; based on the occurrence of the trigger event, identifying an operation scenario from at least one predetermined operation scenario, which are stored in a memory, based on at least one of the number of occurrences of the trigger event, whether the electronic device includes a display device, or mirroring information of the external device obtained through a communication circuitry; and controlling the electronic device to operate based on the operation scenario.

### [Advantageous Effects]

An electronic device may accurately identify whether a trigger event for initiating mirroring occurs based on a detection value of a sensor.

Further, an electronic device may perform mirroring to an external device based on the occurrence of a predetermined trigger event without user intervention, thereby increasing an effectiveness of a mirroring technology and improving a user experience.

While the present disclosure has been particularly described with reference to exemplary embodiments, it should be understood by those of skilled in the art that various changes in form and details may be made without departing from the spirit and scope of the present disclosure.

### [Description of Drawings]

FIG. 1 illustrates a plurality of devices in an Internet of Things (IoT) environment according to one embodiment.
FIG. 2 is a block diagram schematically illustrating an electronic device in the IoT environment according to one embodiment.
FIG. 3 is a control block diagram of the electronic device according to one embodiment.
FIG. 4 is a view illustrating an operation of a sensor included in the electronic device according to one embodiment.
FIG. 5 is a view illustrating an operation of the electronic device for the operation of the sensor described above with reference to FIG. 4.
FIG. 6 is a diagram illustrating a training method of a machine learning model that uses sensor detection values as input values.
FIG. 7 is a diagram illustrating the input values of the machine learning model of FIG. 6.
FIG. 8 is a control flowchart of the electronic device according to one embodiment.
FIG. 9 is a control flowchart of the electronic device for identifying whether a trigger event occurs according to one embodiment.
FIG. 10 is an example of a control flowchart of the electronic device for identifying an exception event according to one embodiment.
FIG. 11 is another example of the control flowchart of the electronic device for identifying the exception event according to one embodiment.
FIG. 12 is a diagram illustrating an example of a process for performing a communication connection between IoT devices according to one embodiment.
FIG. 13 is a diagram illustrating another example of a process for performing a communication connection between IoT devices according to one embodiment.
FIG. 14 is an example of a control flowchart for identifying an operation scenario of the electronic device after a TAP VIEW mode is initiated according to one embodiment.
FIG. 15 is a control flowchart for identifying a validity period of a history of two consecutive occurrences of a trigger event in the external device and a validity period of displaying a mirroring content in the electronic device according to one embodiment.
FIGS. 16 to 21 are diagrams illustrating a process in which the electronic device transmits and receives data with external devices to display a mirroring content regarding a first external device according to one embodiment.
FIG. 22 is another example of a control flowchart for identifying an operation scenario of the electronic device after the TAP VIEW mode is initiated according to one embodiment.
FIG. 23 is a diagram illustrating a process in which the electronic device transmits and receives data with an external device to display a mirroring content regarding a second external device according to one embodiment.

### [Modes of the Invention]

The various embodiments and the terms used therein are not intended to limit the technology disclosed herein to specific forms, and the disclosure should be understood to include various modifications, equivalents, and/or alternatives to the corresponding embodiments.

In describing the drawings, similar reference numerals may be used to designate similar constituent elements.

A singular expression may include a plural expression unless otherwise indicated herein or clearly contradicted by context.

The expressions "A or B," "at least one of A or/and B," or "one or more of A or/and B," A, B or C," "at least one of A, B or/and C," or "one or more of A, B or/and C," and the like used herein may include any and all combinations of one or more of the associated listed items.

Herein, the expressions "a first", "a second", "the first", "the second", etc., may simply be used to distinguish an element from other elements, but is not limited to another aspect (importance or order) of elements.

When an element (e.g., a first element) is referred to as being "(functionally or communicatively) coupled," or "connected" to another element (e.g., a second element), the first element may be connected to the second element, directly (e.g., wired), wirelessly, or through a third element.

In this disclosure, the terms "including", "having", and the like are used to specify features, numbers, steps, operations, elements, components, or combinations thereof, but do not preclude the presence or addition of one or more of the features, numbers, steps, operations, elements, components, or combinations thereof.

When an element is said to be "connected", "coupled", "supported" or "contacted" with another element, this includes not only when elements are directly connected, coupled, supported or contacted, but also when elements are indirectly connected, coupled, supported or contacted through a third element.

Throughout the description, when an element is "on" another element, this includes not only when the element is in contact with the other element, but also when there is another element between the two elements.

The term of "and / or" includes a plurality of combinations of relevant items or any one item among a plurality of relevant items.

The disclosure will be described more fully hereinafter with reference to the accompanying drawings.

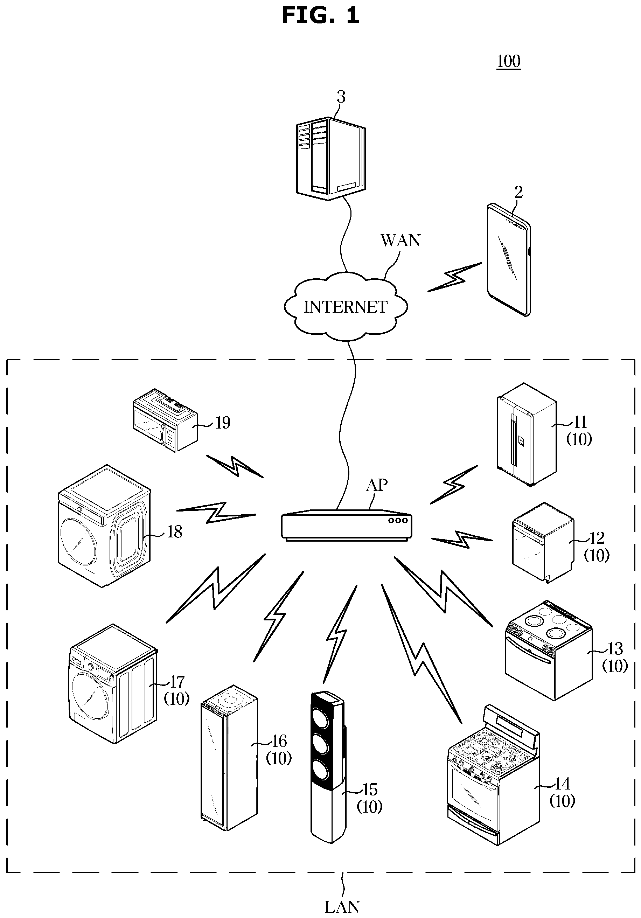

FIG. 1 illustrates a plurality of devices in an Internet of Things (IoT) environment 100 according to one embodiment.

The IoT environment 100 according to one embodiment may include a user device 2, a server 308, at least one electronic device 10, and/or a network connecting the user device 2, the server 308 or the at least one electronic device 10. In the present disclosure, the user device 2 or the at least one electronic device 10 of the IoT environment 100 may also be referred to as an IoT device 301.

The electronic device 10 may include a communication module configured to communicate with other home appliances, the user device 2 or the server 308, a user interface configured to receive a user input or to output information to a user, at least one processor configured to control an operation of the electronic device 10, and at least one memory provided to store a program for controlling the operation of the electronic device 10.

The electronic device 10 may be at least one of various types of home appliances. For example, the electronic device 10 may include at least one of a refrigerator 11, a dishwasher 12, an electric range 13, an electric oven 14, an air conditioner 15, a clothes care apparatus 16, a washing machine 17, a dryer 18, and a microwave oven 19 as illustrated, but is not limited thereto. Alternatively, the electronic device 10 may include various types of home appliances, such as a cleaning robot, a vacuum cleaner, and a television, which are not illustrated in the drawing. In addition, the home appliances mentioned above are merely examples, and in addition to the home appliances mentioned above, a device that is connected to another home appliance, the user device 2, or the server 308 and performs the operations described below may be included in the electronic device 10 according to one embodiment.

The server 308 may include a communication module configured to communicate with another server, the electronic device 10, or the user device 2, at least one processor configured to process data received from another server, the electronic device 10, or the user device 2, and at least one memory provided to store a program for processing data or processed data. The server 308 may be implemented as various computing devices such as a workstation, a cloud, a data drive, a data station, etc. The server 308 may be implemented as one or more servers that are physically or logically separated based on function, detailed configuration of function, or data. The server 308 may transmit and receive data through communication between each server, and process the transmitted and received data.

The server 308 may perform functions such as managing a user account, registering the electronic device 10 by linking the electronic device to the user account, and managing or controlling the registered electronic device 10. For example, a user can access the server 308 through the user device 2 and create a user account. The user account may be identified by an identification (ID) and password set by the user. The server 308 may register the electronic device 10 to the user account according to a set procedure. For example, the server 308 may link identification information (e.g., serial number or MAC address, etc.) of the electronic device 10 to the user account, thereby registering, managing, and controlling the electronic device 10. The user device 2 may include a communication module configured to communicate with the electronic device 10 or the server 308, a user interface configured to receive a user input or output information to a user, at least one processor configured to control the operation of the user device 2, and at least one memory provided to store a program for controlling the operation of the user device 2.

The user device 2 may be carried by a user or placed in the user's house or office, etc. The user device 2 may include a personal computer, a terminal, a mobile phone, a smart phone, a handheld device, a wearable device, etc., but is not limited thereto.

The memory of the user device 2 may store a program, i.e., an application, for controlling the electronic device 10. The application may be sold after being installed on the user device 2 or the application may be installed after being downloaded from an external server.

A user can access the server 308 by executing an application installed on the user device 2, generate a user account, and perform communication with the server 308 based on the logged-in user account, thereby registering the electronic device 10 to the server 308.

For example, when a user manipulates the electronic device 10 to allow the electronic device 10 to access to the sever 308 according to the procedure guided by the application installed on the user device 2, the electronic device 10 may be registered to the user account by registering the identification information (e.g., serial number or MAC address) of the electronic device 10 to the corresponding user account on the server 308.

A user can control the electronic device 10 using the application installed on the user device 2. For example, when the user logs into the user account using the application installed on the user device 2, the electronic device 10 registered to the user account may appear. When a control command for the electronic device 10 is input, the user device 2 may transmit the control command to the electronic device 10 through the server 308.

A network may include both wired and wireless networks. Wired networks may include cable networks or telephone networks, and wireless networks may include any network that transmits and receives signals via radio waves. Wired and wireless networks may be connected to each other.

A network may include a wide area network (WAN) such as the Internet, a local area network (LAN) formed around an Access Point (AP), and a short-range wireless network that does not use an Access Point (AP). Short-range wireless networks may include Bluetooth^{™} (IEEE 802.15.1), Zigbee (IEEE 802.15.4), Wi-Fi Direct, Near Field Communication (NFC), Z-Wave, etc., but is not limited thereto.

The access point (AP) may connect the electronic device 10 or the user device 2 to a wide area network (WAN) to which the server 308 is connected. The electronic device 10 or the user device 2 may be connected to the server 308 via the wide area network (WAN).

The access point (AP) may communicate with the electronic device 10 or the user device 2 using wireless communication such as Wi-Fi^{™} (IEEE 802.11), Bluetooth^{™} (IEEE 802.15.1), and Zigbee (IEEE 802.15.4), and may access to the wide area network (WAN) using wired communication, but is not limited thereto.

According to various embodiments, the electronic device 10 may be directly connected to the user device 2 or the server 308 without passing through the access point (AP).

The electronic device 10 may be connected to the user device 2 or the server 308 via the long-range wireless network or the short-range wireless network.

For example, the electronic device 10 may be connected to the user device 2 via the short-range wireless network (e.g., Wi-Fi Direct).

As another example, the electronic device 10 may be connected to the user device 2 or the server 308 via the wide area network (WAN) using the long-range wireless network (e.g., a cellular communication module).

As another example, the electronic device 10 may access a wide area network (WAN) using wired communication and be connected to the user device 2 or the server 308 through the wide area network (WAN).

When the electronic device 10 accesses to a wide area network (WAN) using wired communication, the electronic device 10 may also act as an access point. Accordingly, the electronic device 10 may connect other home appliances to the wide area network (WAN) to which the server 308 is connected. In addition, other home appliances may connect the electronic device 10 to the wide area network (WAN) to which the server 308 is connected.

The electronic device 10 may transmit information on the operation or status of the electronic device 10 to other home appliance, the user device 2 or the server 308 via the network. For example, the electronic device 10 may transmit information on the operation or status to other home appliance, the user device 2 or the server 308 when a request is received from the server 308, when a specific event occurs in the electronic device 10, and/or periodically or in real time.

When receiving information on the operation or status from the electronic device 10, the server 308 may update the stored information on the operation or status of the electronic device 10 and transmit the updated information on the operation or status of the electronic device 10 to the user device 2 via the network. The update of information may include various operations in which existing information is changed, such as an operation of adding new information to existing information and an operation of replacing existing information with new information.

The electronic device 10 may obtain various information from other home appliance, the user device 2 or the server 308, and provide the obtained information to a user. For example, the electronic device 10 may obtain information on the function of the electronic device 10 (e.g., recipes, washing methods, etc.), and various environmental information (e.g., weather, temperature, humidity, air quality, etc.) from the server 308, and output the obtained information through a user interface.

The electronic device 10 may operate according to a control command received from other home appliance, the user device 2 or the server 308. For example, when the electronic device 10 obtains prior approval from a user so as to operate according to the control command of the server 308 even without a user input, the electronic device 10 may operate according to the control command received from the server 308. The control command received from the server 308 may include a control command input by a user through the user device 2 or a control command based on predetermined conditions, but is not limited thereto.

The user device 2 may transmit information on a user to the electronic device 10 or the server 308 via the communication module. For example, the user device 2 may transmit information on a user's location, a user's health status, a user's preferences, a user's schedule, etc. to the server 308. The user device 2 may transmit information on the user to the server 308 according to the user's prior approval.

The electronic device 10, the user device 2, or the server 308 may determine a control command using artificial intelligence technology. For example, the server 308 may receive information on the operation or status of the electronic device 10 or information on the user of the user device 2, process the information using technology such as artificial intelligence, and transmit the processing result or a control command to the electronic device 10 or the user device 2 based on the processing result.

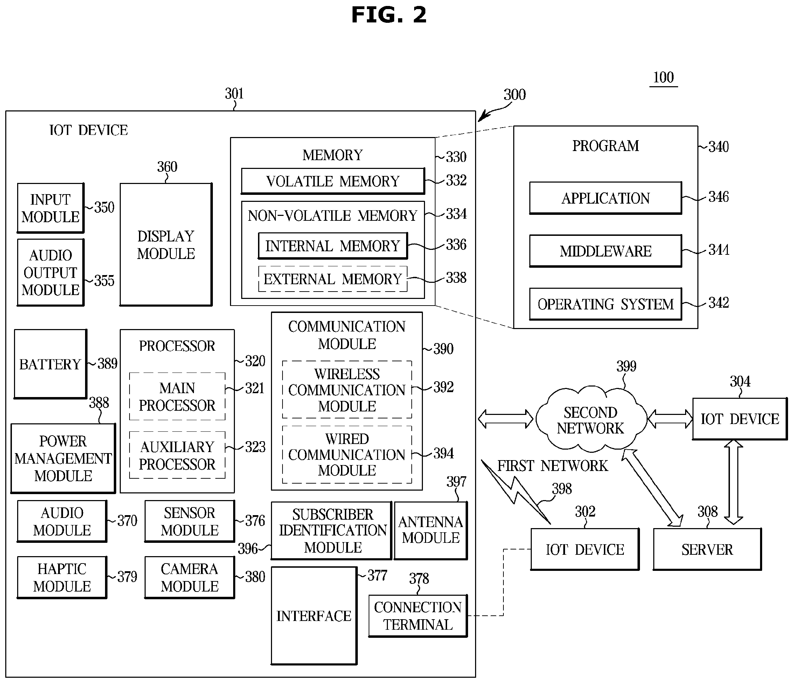

FIG. 2 is a block diagram schematically illustrating the IoT device 301 in the IoT environment 100 according to one embodiment.

In the IoT environment 100 according to one embodiment, the same device (e.g., IoT device 301) may operate as the electronic device 10 of FIG. 1 and may also operate as the user device 2 of FIG. 1. Hereinafter a configuration and/or function of the IoT device 301 that may operate as the electronic device 10 and/or the user device 2 will be described in detail with reference to FIG. 2.

Referring to FIG. 2, in the IoT environment 100, the IoT device 301 may communicate with another IoT device 302 through a first network 398 (e.g., a short-range wireless communication network), or may communicate with at least one of the other IoT device 304 or the server 308 through a second network 399 (e.g., a long-range wireless communication network). According to one embodiment, the IoT device 301 may also communicate with the other IoT device 304 through the server 308.

According to one embodiment, the IoT device 301 may include a processor 320, a memory 330, an input module 350, an audio output module 355, a display module 360, an audio module 370, a sensor module 376, an interface 377, a connection terminal 378, a haptic module 379, a camera module 380, a power management module 388, a battery 389, a communication module 390, a subscriber identification module 396, and/or an antenna module 397.

In the IoT device 301, at least one of the above-described components (e.g., the connection terminal 378) may be omitted, or one or more other components may be added. In addition, in the IoT device 301, some of these components (e.g., the sensor module 376, the camera module 380, or the antenna module 397) may be integrated into one component (e.g., the display module 360).

The processor 320 may control at least one other component of the IoT device 301 connected to the processor 320 by executing software (e.g., the program 340) and may perform various data processing or operations. At this time, the component of the IoT device 301 connected to the processor 320 may include hardware or software components.

According to one embodiment, as at least a part of data processing or calculation, the processor 320 may store commands or data received from another component (e.g., the sensor module 376 or the communication module 390) in a volatile memory 332, process the commands or data stored in the volatile memory 332, and store resultant data in a nonvolatile memory 334. In this case, the data received from the other component may include information obtained by the sensor module 376.

According to one embodiment, the processor 320 may include a main processor 321 (e.g., a central processing unit or an application processor) or an auxiliary processor 323 (e.g., a graphics processing unit, a neural processing unit (NPU), an image signal processor, a sensor hub processor, or a communication processor) that may operate independently or together with the main processor 321. For example, when the IoT device 301 includes the main processor 321 and the auxiliary processor 323, the auxiliary processor 323 may be configured to use less power than the main processor 321 or to be specialized for a designated function. The auxiliary processor 323 may be implemented separately from the main processor 321 or implemented as a part of the main processor 321.

The auxiliary processor 323 may control at least a portion of functions or states associated with at least one of the components of the IoT device 301 (e.g., the display module 360, the sensor module 376, or the communication module 390) on behalf of the main processor 321 while the main processor 321 is in an inactive (e.g., sleep) state, or together with the main processor 321 while the main processor 321 is in an active (e.g., application execution) state. The auxiliary processor 323 (e.g., an image signal processor or a communication processor) may be implemented as part of another functionally related component (e.g., the camera module 380 or the communication module 390).

According to one embodiment, the auxiliary processor 323 (e.g., a neural network processing device) may include a hardware structure specialized for processing an artificial intelligence model. The artificial intelligence model may be generated through machine learning. The learning may be performed in the IoT device 301 itself on which the artificial intelligence model is executed, or may be performed through a separate server (e.g., the server 308). The learning algorithm may include supervised learning, unsupervised learning, semi-supervised learning, or reinforcement learning, but is not limited to the examples described above. The artificial intelligence model may include a plurality of artificial neural network layers. The artificial neural network may be one of a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or a combination of two or more of the above, but is not limited to the examples described above. The artificial intelligence model may additionally or alternatively include a software structure in addition to a hardware structure.

The memory 330 may store various data obtained or used by at least one component (e.g., the processor 320 or the sensor module 376) of the IoT device 301. For example, the data may include input data or output data for software (e.g., the program 340) and commands related thereto. The memory 330 may include the volatile memory 332 or the non-volatile memory 334.

The program 340 may be stored as software in the memory 330 and may include an operating system 342, a middleware 344, or an application 346.

The input module 350 may receive commands or data to be used for a component (e.g., the processor 320) of the IoT device 301 from an external part (e.g., a user) of the IoT device 301. The input module 350 may include a microphone, a mouse, a keyboard, a key (e.g., a button), or a digital pen (e.g., a stylus pen).

The audio output module 355 may output an audio signal to the outside of the IoT device 301. The audio output module 355 may include a speaker or a receiver. The speaker may be used for general purposes such as multimedia playback or recording playback. The receiver may be used to receive an incoming call. According to one embodiment, the receiver may be implemented separately from the speaker or implemented as a part of the speaker.

The display module 360 may visually provide information to an external part (e.g., a user) of the IoT device 301. The display module 360 may include a display, a holographic device, or a projector and a control circuit for controlling the corresponding device. In addition, the display module 360 may include a touch sensor configured to detect a touch, or a pressure sensor configured to measure an intensity of a force generated by the touch.

The audio module 370 may convert sound into an electrical signal or convert an electrical signal into sound. The audio module 370 may obtain sound through the input module 350, or output sound through an audio output module 355, or an external electronic device (e.g., an electronic device 302 such as a speaker or headphone) directly or wirelessly connected to the IoT device 301.

The sensor module 376 may detect the operating state (e.g., power or temperature) of the IoT device 301 or the external environmental status (e.g., user status) and generate an electric signal or data value corresponding to the detected status. According to one embodiment, the sensor module 376 may include a gesture sensor, a gyro sensor, a barometric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 377 may support one or more designated protocols that may be used to directly or wirelessly connect the IoT device 301 to an external electronic device (e.g., the electronic device 302). According to one embodiment, the interface 377 may include a high-definition multimedia interface (HDMI), a universal serial bus (USB) interface, an SD card interface, or an audio interface.

The connection terminal 378 may include a connector through which the IoT device 301 may be physically connected to an external electronic device (e.g., the electronic device 302). According to one embodiment, the connection terminal 378 may include an HDMI connector, a USB connector, an SD card connector, or an audio connector (e.g., a headphone connector).

The haptic module 379 may convert an electrical signal into a mechanical stimulus (e.g., vibration or movement) or an electrical stimulus that a user can perceive through a tactile or kinesthetic sense. According to one embodiment, the haptic module 379 may include a motor, a piezoelectric element, or an electrical stimulation device.

The camera module 380 may obtain still images and moving images. According to one embodiment, the camera module 380 may include one or more lenses, image sensors, image signal processors, or flashes.

The power management module 388 may manage power supplied to the IoT device 301. According to one embodiment, the power management module 388 may be implemented as at least a part of a power management integrated circuit (PMIC).

The battery 389 may supply power to at least one component of the IoT device 301. According to one embodiment, the battery 389 may include a non-rechargeable (primary) battery, a rechargeable (secondary) battery, or a fuel cell.

The communication module 390 may support establishment of a direct (e.g., wired) communication channel or a wireless communication channel between the IoT device 301 and an external electronic device (e.g., the electronic device 302, the electronic device 304, or the server 308), and performance of communication through the established communication channel. The communication module 390 may include one or more communication processors that operate independently from the processor 320 (e.g., application processor) and support direct (e.g., wired) communication or wireless communication. According to one embodiment, the communication module 390 may include a wireless communication module 392 (e.g., a cellular communication module, a short-range wireless communication module, or a global navigation satellite system (GNSS) communication module) or a wired communication module 394 (e.g., a local area network (LAN) communication module or a power line communication module). Among these communication modules, a corresponding communication module may communicate with the external electronic device 304 via the first network 398 (e.g., a short-range communication network such as Bluetooth, wireless fidelity (Wi-Fi) direct, or infrared data association (IrDA)) or the second network 399 (e.g., a long-range communication network such as a legacy cellular network, a 5G network, a next-generation communication network, the Internet, or a computer network (e.g., a LAN or WAN)). These various types of communication modules may be integrated into a single component (e.g., a single chip) or implemented as a plurality of separate components (e.g., multiple chips). The wireless communication module 392 may use subscriber information (e.g., an international mobile subscriber identity (IMSI)) stored in the subscriber identification module 396 to identify or authenticate the IoT device 301 within a communication network such as the first network 398 or the second network 399.

The wireless communication module 392 may support a 5G network after a 4G network, and next-generation communication technology such as new radio (NR) access technology. The NR access technology may support enhanced mobile broadband (eMBB) that is high-speed transmission of high-capacity data, massive machine type communications (mMTC) that minimizes terminal power and connects multiple terminals or ultra-reliable and low-latency communications (URLLC). The wireless communication module 392 may support a high-frequency band (e.g., mmWave band) to obtain a high data transmission rate. The wireless communication module 392 may support various technologies, such as beamforming, massive multiple-input and multiple-output (MIMO), full dimensional MIMO (FD-MIMO), array antenna, analog beam-forming, or large-scale antenna, to secure performance in a high-frequency band. The wireless communication module 392 may support various requirements specified in the IoT device 301, an external electronic device (e.g., the electronic device 304), or a network system (e.g., the second network 399). According to one embodiment, the wireless communication module 392 may support a peak data rate (e.g., 20 Gbps or more) for eMBB realization, a loss coverage (e.g., 164 dB or less) for mMTC realization, or a U-plane latency (e.g., 0.5 ms or less, or the round trip of 1 ms or less in each of a downlink (DL) and an uplink (UL)) for URLLC realization.

The antenna module 397 may transmit or receive signals or power to or from the outside (e.g., an external electronic device). According to one embodiment, the antenna module 397 may include an antenna including a radiator formed of a conductor or a conductive pattern formed on a substrate (e.g., a printed circuit board (PCB)). According to one embodiment, the antenna module 397 may include a plurality of antennas (e.g., an array antenna). In this case, at least one antenna suitable for a communication method used in a communication network, such as the first network 398 or the second network 399, may be selected from the plurality of antennas by the communication module 390. A signal or power may be transmitted or received between the communication module 390 and the external electronic device through the selected at least one antenna. According to some embodiments, in addition to the radiator, another component (e.g., a radio frequency integrated circuit (RFIC)) may be additionally formed as a part of the antenna module 397.

According to various embodiments, the antenna module 397 may form an mmWave antenna module. According to one embodiment, the mmWave antenna module may include a printed circuit board, a radio frequency integrated circuit (RFIC) disposed on or adjacent to a first surface (e.g., a lower surface) of the printed circuit board and configured to support a designated high frequency band (e.g., an mmWave band), and a plurality of antennas (e.g. an array antenna) disposed on or adjacent to a second surface (e.g., an upper surface or a side surface) of the printed circuit board and configured to transmit or receive a signal of the designated high frequency band.

At least a part of the components may be interconnected through the communication method (e.g., bus, general purpose input and output (GPIO), serial peripheral interface (SPI), or mobile industry processor interface (MIPI)) among peripheral devices and exchange a signal (e.g., command or data) from each other.

According to one embodiment, a command or data may be transmitted or received between the IoT device 301 and the external electronic device 302 or 304 via the server 308 connected to the second network 399. Each of the external electronic devices 302 or 304 may be a device of a same type as, or a different type from, the IoT device 301. According to one embodiment, all or a part of operations to be executed at the IoT device 301 may be executed by at least one external electronic device among external electronic devices 302, 304, or 308. For example, when it is required that the IoT device 301 should perform any function or service automatically, or in response to a request from a user or another device, the IoT device 301 may request the one or more external electronic devices to perform at least a part of the function or the service, instead of or in addition to executing the function or the service by itself. The one or more external electronic devices receiving the request may execute at least a part of the function or the service requested, or an additional function or service related to the request, and transfer a result of the execution to the IoT device 301. The IoT device 301 may provide the result, with or without further processing of the result, as at least a part of the response to the request. For this, a cloud computing, distributed computing, mobile edge computing (MEC), or client-server computing technology may be used. The IoT device 301 may provide an ultra-low latency service using the distributed computing or mobile edge computing.

According to another embodiment, the external electronic device 304 may include an Internet of Things (IoT) device. The server 308 may be an intelligent server using machine learning and/or a neural network.

According to one embodiment, the external electronic device 304 or the server 308 may be included in the second network 399. The IoT device 301 may be applied to an intelligent service (e.g., a smart home, a smart city, a smart car, or healthcare) based on the 5G communication technology and an IoT-related technology.

An electronic device according to various embodiment disclosed in the present disclosure may be devices of various forms. The electronic devices may include portable communication devices (e.g., smartphones), computer devices, portable multimedia devices, portable medical devices, cameras, wearable devices, or home appliance devices. The electronic devices according to embodiments of the present disclosure are not limited to the above-described devices.

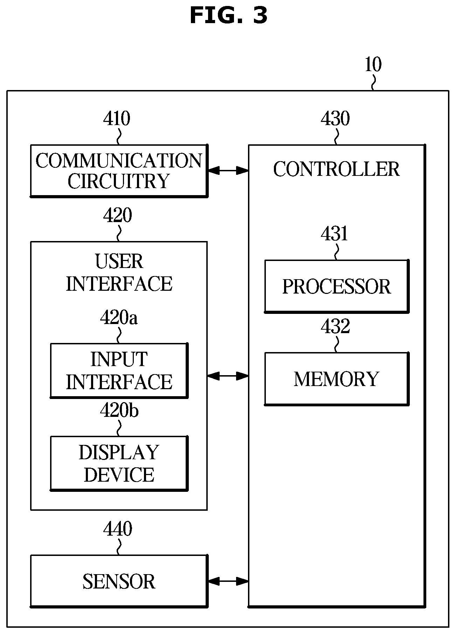

FIG. 3 is a control block diagram of the electronic device 10 according to one embodiment.

Referring to FIG. 3, the electronic device 10 may include a communication circuit 410, a user interface 420, a controller 430, and/or a sensor 440. The controller 430 may include at least one processor 431 and at least one memory 432.

According to various embodiments, the electronic device 10 may further include at least some of the configurations and/or functions of the IoT device 301 of FIG. 3, and may implement various embodiments of the present document even when some of the illustrated configurations are omitted or replaced. According to various embodiments, the electronic device 10 may be implemented as any one device within the IoT environment 100. For example, the electronic device 10 may be any one of the electronic device 10 or the user device 2 within the IoT environment 100.

The electronic device 10 may be a device including the sensor 440 including various sensors (e.g., a camera, a light sensor, or a microphone), such as a smart phone or a tablet PC, and equipped with at least one processor and/or memory resource. In this case, the electronic device 10 may provide an IoT service by installing and executing an application that supports the IoT service.

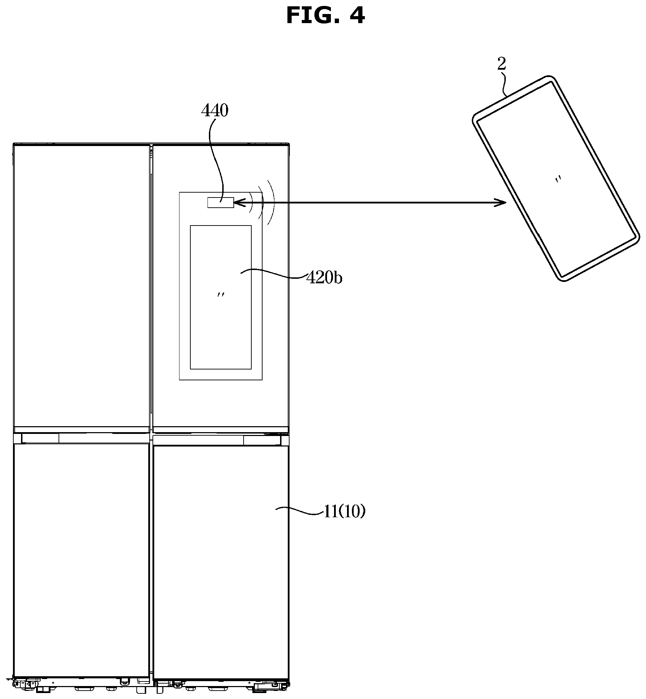

The communication circuit 410 may support wireless communication (e.g., Wi-Fi and cellular communication) and may transmit and receive data with other IoT devices or cloud networks within the IoT environment. The communication circuit 410 may include the communication module 39 and/or the antenna module 397 of FIG. 4.

The communication circuit 410 may communicate with other devices through an access point (AP), or may communicate directly with other devices using a device-to-device (D2D) communication such as Bluetooth, or peer-to-peer (P2P) communication such as Wi-Fi Direct or Wi-Fi Aware.

The user interface 420 may provide information necessary for providing IoT services to an external part (e.g., a user) of the electronic device 10 as visual information or audio information.

The user interface 420 may include the display module 360, the input module 350, the audio output module 355, the audio module 370, and/or the sensor module 376 of FIG. 4.

According to one embodiment, the user interface 420 may include a touch screen including a touch sensing circuit (or a touch sensor) (not shown), a pressure sensor configured to measure an intensity of a touch, and/or a touch panel (e.g., a digitizer) configured to detect a magnetic field-type stylus pen.

The touch screen may include a liquid crystal display (LCD), an organic light emitted diode (OLED), an active-matrix organic light emitted diode (AMOLED), a flexible display, or an expandable display, but is not limited thereto.

According to one embodiment, the user interface 420 may provide guidance regarding an authentication operation of the electronic device 10 through various visual information.

Particularly, the user interface 420 may include a microphone, a mouse, a keyboard, or a key (e.g., a button) for receiving a command or data to be used for the authentication operation of the electronic device 10 from an external part (e.g., a user) of the electronic device 10. In addition, the user interface 420 may include a speaker to provide various information and/or guidance for guiding the authentication operation through voice information.

According to one embodiment, the user interface 420 may include at least one input interface 420a and at least one display device 420b.

The at least one input interface 420a may include a tact switch, a push switch, a slide switch, a toggle switch, a micro switch, a touch switch, a touch pad, a touch screen, a jog dial, and/or a microphone.

According to the present disclosure, 'button' may be replaced with a User Interface (UI) element, a tact switch, a push switch, a slide switch, a toggle switch, a micro switch, a touch switch, a touch pad, a touch screen, a jog dial, and/or a microphone.

The at least one display device 420b may transmit various information related to the authentication operation to a user by generating sensory information.

According to one embodiment, the display device 420b may output a video corresponding to content data generated based on mirroring content information received from the communication circuit 410 and/or a user input signal transmitted from the input interface 420a.

For example, when the content in the video is at least one image, the display device 420b may output a still image for a selected area of at least one image based on a user input signal transmitted from the communication circuit 410 and/or the input interface 420a.

For example, the at least one display device 420b may output a notification regarding an operation for mirroring an external device. Further, the at least one display device 420b may output an instruction regarding an operation for device authentication, and the instruction may include a visual indicator.

The visual indicator may include at least one of an illustration, a graphic guide, or a visual reference.

The controller 430 may include the at least one processor 431 and the at least one memory 432. When the controller 430 includes the at least one processor 431 and the at least one memory 432, the at least one processor 431 and the at least one memory 432 may be integrated into one chip or may be physically separated.

The processor 431 may be a component that may perform calculations or data processing related to control and/or communication of each component of the electronic device 10. The processor 431 may be operatively, functionally, and/or electrically connected to each component of the electronic device 10, such as the communication circuit 410, the user interface 420, the memory 432, and/or the sensor 440.

According to various embodiments, there is no limitation to the calculation and data processing functions that the processor 431 may implement within the electronic device 10. Hereinafter a function for determining whether a proximity movement event of an object occurs using acceleration data obtained through the sensor 440 as an input value will be described in detail. The operation of the processor 431 described below may be performed by executing instructions based ona predetermiendoperation scenario stored in the memory 432.

The processor 431 according to one embodiment may include the processor 320 of FIG. 3.

The memory 432 may include a volatile memory and a non-volatile memory, and may temporarily or permanently store various data used in at least one component (e.g., the processor 431) of the electronic device 10. The memory 432 may store various commands that may be performed in the processor 431. The commands may include various control commands including arithmetic and logical operations, data movement, or input/output that may be recognized by the processor 431.

The processor 431 may determine whether a trigger event occurs based on the detection value of the sensor 440. In response to the occurrence of the trigger event, the processor 431 may identify a operation scenario from at least one operation scenario based on at least one of the number of occurrences of the trigger event, whether the electronic device 10 includes the display device, or mirroring information of the external device obtained through the communication circuit 410. Further, the processor 431 may control at least one of the communication circuit 410 or the display device 420b based on the identified operation scenario.

The processor 431 may determine whether an event occurs based on the detection value of the sensor 440, determine whether the event corresponds to an exception event, and determine whether the event is a trigger event based on the event not corresponding to the exception event.

The processor 431 may determine that the event occurs based on the external device being determined to be moving in proximity to the electronic device 10 based on the detection value of the sensor 440.

The processor 431 may determine that the occurred event corresponds to the exception event based on the occurrence of an opening/closing event of the door of the electronic device 10 or based on a user touch being received through the user interface 420a.

The processor 431 may determine whether the occurred event corresponds to the exception event based on the mirroring information of the external device even when the opening/closing event of the door of the electronic device 10 does not occur and the user touch is not received through the user interface 420.

The processor 431 may determine whether the external device corresponds to a device registered to the server 308 based on the mirroring information of the external device received through the communication circuit 410, and determine that the occurred event corresponds to the exception event in response to the external device not corresponding to the device registered to the server 308.

The processor 431 may determine whether the external device is allowed to directly communicate with the electronic device 10 based on the mirroring information of the external device received through the communication circuit 410, and determine that the occurred event corresponds to the exception event in response to the external device not being allowed to directly communicate with the electronic device 10.

The processor 431 may determine whether the event corresponds to the trigger event by inputting feature values about a plurality of features, which is based on information obtained from the sensor 440, to a machine learning model 600.

The sensor 440 may include an acceleration sensor. The plurality of feature values may include at least one of an x-axis detection value, a y-axis detection value, a z-axis detection value, a standard deviation of x-axis detection values, a standard deviation of y-axis detection values, a standard deviation of z-axis detection values, or {(x-axis detection value)²+(y-axis detection value)²+(z-axis detection value)²}^{1/2}, which are normalized values.

The processor 431 may determine whether a vibration value obtained based on the information obtained from the sensor 440 exceeds a predetermined vibration threshold based on the determination that the event corresponds to the trigger event, and identify a operation scenario from at least one of the operation scenario based on the vibration value exceeding the predetermined vibration threshold.

The processor 431 may control the display device 420b to display a mirroring content regarding a first external device 701 based on the mirroring content information of the first external device in response to the determination that the trigger event occurs twice consecutively in the electronic device 10, in response to the determination that the electronic device 10 includes the display device 420b, and in response to the determination that there is a history of two consecutive occurrences of the trigger event in the first external device 701.

The processor 431 may control the electronic device 10 to operate based on a first operation scenario in response to the determination that the trigger event occurs twice consecutively in the electronic device 10, in response to the determination that the electronic device 10 does not include the display device 420b, and in response to the determination that there is a history of two consecutive occurrences of the trigger event in the first external device 701.

Based on the first operation scenario, the processor 431 may invalidate both the two consecutive occurrences of the trigger event in the first external device and the two consecutive occurrences of the trigger event in the electronic device, and control the communication circuit 410 to transmit a control command to a second external device 702 to allow the second external device 702 to output a termination notification.

Based on the first operation scenario, the processor 431 may validate the two consecutive occurrences of the trigger event in the first external device and invalidate the two consecutive occurrences of the trigger event in the electronic device 10, and control the communication circuit 410 to transmit a control command to the second external device 702 to allow the second external device to output a first instruction notification. The first instruction notification may include a notification that allows two consecutive trigger events to be occurred in another electronic device including the display device 420b.

Based on the first operation scenario, the processor 431 may invalidate the two consecutive occurrences of the trigger event in the first external device 701 and validate the two consecutive occurrences of the trigger event in the electronic device 10, and control the communication circuit 401 to transmit the mirroring information of the electronic device to the server or the external device.

The processor 431 may control the display device 420b to display the mirroring content regarding the second external device 702 based on the mirroring content information of the second external device 702 in response to the determination that the trigger event occurs once in the electronic device 10, in response to the determination that the electronic device 10 includes the display device 420b, and in response to the determination that there is no history of two consecutive occurrences of the trigger event in the first external device 701.

The mirroring information of the external device may further include identification information of the second external device 702 or the mirroring content information of the second external device 702.

The processor 431 may control the electronic device 10 to operate based on a second operation scenario in response to the determination that the trigger event occurs once in the electronic device 10, and in response to the determination that the electronic device 10 does not include the display device 420b.

The processor 431 may control the communication circuit 410 to transmit a control command to the second external device 702 to allow the second external device 701 to output the termination notification based on the second operation scenario.

The processor 431 may control the electronic device 10 to operate based on a third operation scenario in response to the determination that the trigger event occurs once in the electronic device 10, in response to the determination that the electronic device 10 includes the display device 420b, and in response to the determination that there is a history of two consecutive occurrences of the trigger event in the first external device 701.

Based on the third operation scenario, the processor 431 may determine that the two consecutive trigger events occur in the electronic device 10, and may control the display device 420b to display a mirroring content based on the mirroring content information of the first external device 701.

Based on the third operation scenario, the processor 431 may invalidate both the two consecutive occurrences of the trigger event in the first external device 701 and the occurrence of a single trigger event in the electronic device 10, and control the communication circuit 410 to transmit a control command to the second external device 702 to allow the second external device 702 to output a notification.

Based on the third operation scenario, the processor 431 may transmit a control command to the second external device 702 to allow the second external device 702 to output a second instruction notification regarding a user's selection in order to receive a selection regarding the operation of the electronic device 10 from the user. Based on the user's selection regarding the operation of the electronic device 10 received from the second external device 702 or the user interface 420 of the electronic device 10, the processor 431 may identify whether to display a mirroring content based on the mirroring content information of the first external device 701, based on the identifying that the two consecutive trigger events occur in the electronic device 10 or to invalidate both the two consecutive occurrences of the trigger event in the first external device 701 and the occurrence of the single trigger event in the electronic device 10 and to control the communication circuit 410 so as to transmit a control command to the second external device 702 to allow the second external device 702 to output the termination notification.

Based on the third operation scenario, the processor 431 may validate the two consecutive occurrences of the trigger event in the first external device 701, invalidate the occurrence of the single trigger event in the electronic device 10, and control the communication circuit 410 to transmit a control command to the second external device 702 to allow the second external device 702 to output a third instruction notification.

The third instruction notification may include a notification that allows two consecutive trigger events to be occurred in the electronic device 10.

Based on the third operation scenario, the processor 431 may validate the occurrence of the single trigger event in the electronic device 10, invalidate the two consecutive occurrences of the trigger event in the first external device 701, determine that the single trigger event occurs in the electronic device 10, and control the display device 420b to display a mirroring content regarding the second external device 702 based on the mirroring content information of the second external device 702.

The electronic device 10 may include at least one sensor 440 for detecting an external device or a user (hereinafter referred to as an 'object' as a concept including an external device or a user). For example, the electronic device 10 may include the sensor 440 such as an acceleration sensor, a vibration sensor, and/or a motion sensor for detecting an object moving at a variable speed relative to the electronic device 10.

The sensor 440 may include a camera. The camera may have a predetermined capture area and may obtain an image for the predetermined capture area. For example, the camera may capture an external device in the predetermined capture area to obtain an image of an object. At this time, the camera may mean any configuration configured to obtain an image of a user. For example, the camera may include an RGB camera, an infrared (IR) camera, an optical flow camera, a stereo camera, and/or a depth sensing camera.

The sensor 440 may mean any configuration configured to obtain information related to the movement of an object. For example, the sensor 440 may include an infrared (IR) sensor, an ultrasonic sensor, an accelerometer and gyroscope sensor, an optical sensor, and/or a depth sensor.

The electronic device 10 may transmit data related to the detection value of the sensor 440 obtained through the sensor 440 to a cloud network or an external device, thereby providing the IoT environment 100 that controls other devices on a local network based on the cloud (or edge).

Hereinafter a process of processing data collected from the sensor 440 to determine whether a trigger event for initiating an operation of the sensor 440 and a tap view mode occurs will be described with reference to FIGS. 4 to 7.

FIG. 4 is a view illustrating an operation of the sensor 440 included in the electronic device 10 according to one embodiment.

According to one embodiment, the electronic device 10 (e.g., the refrigerator 11 of FIG. 4) may include the sensor 440 for detecting a proximity movement of an object (e.g., the user device 2 of FIG. 4). The sensor 440 may be mounted in a module form on the inside of an outer cover of the refrigerator 11.

According to one embodiment, the sensor 440 may detect physical acceleration as the user device 2 moves at a variable speed relative to the refrigerator 11, and convert the detected value into an electrical signal.

For example, in order to detect movement of the user device 2 (e.g., a proximity movement of the user device 2 toward the electronic device 10), the sensor 440 may detect a magnitude and direction of vibration applied to the refrigerator 11 when the user device 2 is accelerated or decelerated.

The processor 431 may determine whether an object is moving in proximity to the electronic device 10 based on an electrical signal obtained from the sensor 440.

In the above description, the user device 2 is described as an example of an object, and the refrigerator 11 is described as an example of the electronic device 10. However, this is merely an example but is not limited thereto. For example, the sensor 440 may operate as described above even when a proximity movement of another IoT device 301, the user device 2, or the user is moving in proximity to the electronic device 10 as an object.

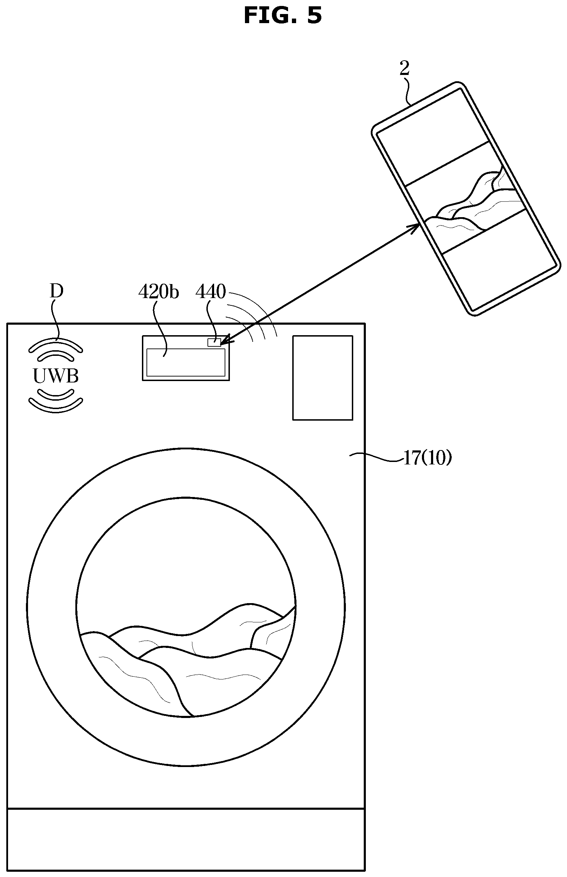

FIG. 5 is a view illustrating an operation of the electronic device 10 for the operation of the sensor 440 described above with reference to FIG. 4.

The electronic device 10 according to one embodiment may include an indicator D for indicating a position of the sensor 440 that detects a proximity movement of an object.

For example, the indicator D for indicating the position of the sensor 440 may be displayed in the form of a sticker on the outside of the cover of the electronic device 10 of FIG. 5 (e.g., the washing machine 17 of FIG. 5) at a position close to the position in which the sensor 440 is mounted. Accordingly, a guide may be provided to cause a user to move an object close to the position adjacent to the sensor 440.

According to one embodiment, the washing machine 17 may perform predetermined operations to improve an accuracy of the sensor 440 when the sensor 440 operates to detect a movement of an object (e.g., the user device 2 of FIG. 5), i.e., a proximity movement to the electronic device 10.

The electronic device 10, such as the washing machine, the dryer, or the dishwasher, may affect the sensor 440 in detecting the proximity movement of an object by causing vibrations in the electronic device 10 itself when operating according to its original function.

For example, even when there is no proximity movement of an object in a state in which the washing machine 17 of FIG. 5 performs the washing process corresponding to its original function, the sensor 440 may detect a magnitude and direction of a vibration as if the sensor 440 detects the proximity movement of an object, due to the vibration of the washing machine 17 itself (i.e., due to the vibration caused by the operation of a motor of the washing machine 17).

Accordingly, the accuracy of data regarding the proximity movement of the object obtained by the sensor 440 may decrease, and the proximity movement of the object may not be accurately detected.

As for the washing machine 17 according to one embodiment, when a current operating state corresponds to a state that reduces the accuracy of data obtained by the sensor 440, the operating state of the washing machine 17 may be switched to a state in which the proximity movement of the object is accurately detected as the proximity movement of the user device 2 is detected by the sensor 440.

For example, when the proximity movement of the user device 2 is detected by the sensor 440 in a state in which the motor of the washing machine 17 operates (e.g., when the washing machine 17 performs the washing process or a drying process), the washing machine 17 may reduce a revolution per minute (RPM) of the motor or switch the operating state to allow the motor to stop.

At this time, the washing machine 17 may determine that the proximity movement of the user device 2 is detected in response to the presence of the user device 2 within a predetermined distance range from the washing machine 17 based on a detection value of the sensor 440.

Accordingly, the washing machine 17 may prevent the sensor 440 from being affected in detecting the proximity movement of the object due to vibration generated in the washing machine 17 itself.

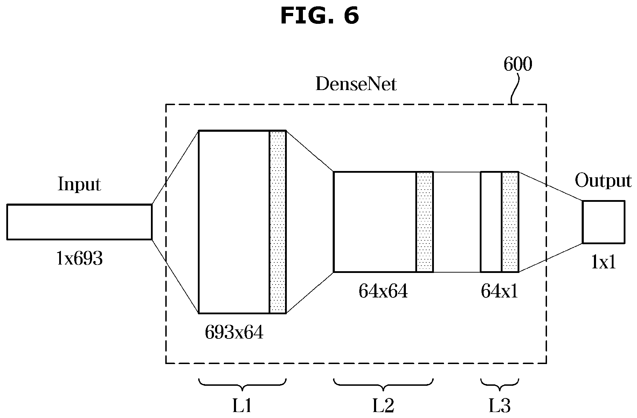

FIG. 6 is a diagram illustrating a process in which data collected from the sensor 440 of the electronic device 10 is processed by the machine learning model 600 according to one embodiment.

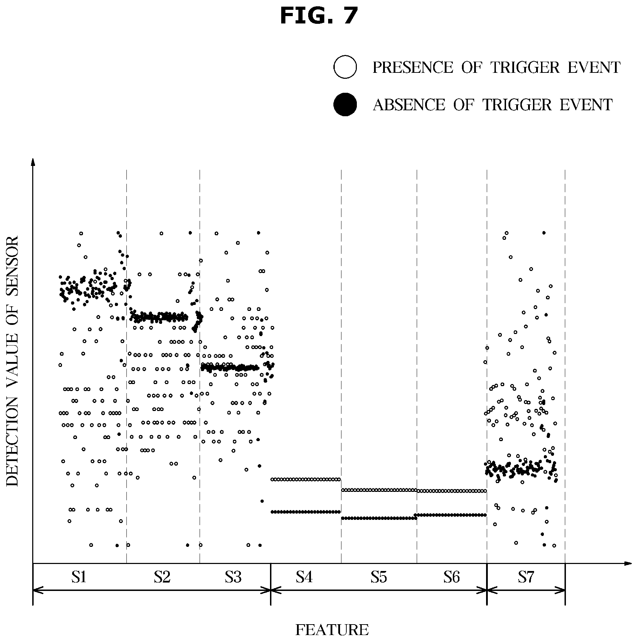

FIG. 7 is a diagram illustrating the input values of the machine learning model 600 of FIG. 6.

According to one embodiment, the electronic device 10 may collect information on the movement of the object from the sensor 440, such as acceleration data according to the proximity movement.

The sensor 440 may transmit the collected acceleration data to the processor 431.

The processor 431 may process the acceleration data collected by the sensor 440 and train the machine learning model 600 to determine whether the proximity movement of the object occurs based on the processed data. For this, the processor 431 may be equipped with the machine learning model 600.

Data collected from the sensor 440 may be processed by the machine learning model 600 mounted on the processor 431.

The processor 431 according to one embodiment may train the machine learning model 600 using data collected from the sensor 440 as input values.

The input value of the machine learning model 600 may include seven types of features based on detection values of 3-axis acceleration of the sensor 440.

The seven types of features may include at least one of x-axis detection value, y-axis detection value, and z-axis detection value which are normalized to a range of 0 to 1, a standard deviation of the x-axis detection value, the y-axis detection value, and the z-axis detection value which are normalized to a range of 0 to 1, or {(x-axis detection value)²+(y-axis detection value)²+(z-axis detection value)²}^{1/2}.

As for the input value of the machine learning model 600, the normalized feature value may be used as the input value, and thus even when an offset error occurs due to the position and/or inclination of the sensor 440 in the electronic device 10, the value may be corrected to a similar range, thereby reducing the error due to the installation environment or operation environment of the sensor 440.

For example, the input value of the machine learning model 600 may include 99 x-axis detection values normalized to the range of 0 to 1, 99 y-axis detection values normalized to the range of 0 to 1, 99 z-axis detection values normalized to the range of 0 to 1, 99 standard deviations of the x-axis detection values normalized to the range of 0 to 1, 99 standard deviations of the y-axis detection values normalized to the range of 0 to 1, 99 standard deviations of the z-axis detection values normalized to the range of 0 to 1, and 99 values of {(x-axis detection value)²+(y-axis detection value)²+(z-axis detection value)²}^{1/2} for the x-axis, the y-axis, and the z-axis detection values, respectively. At this time, 99 standard deviations of the x-axis detection values normalized to the range of 0 to 1, 99 standard deviations of the y-axis detection values normalized to the range of 0 to 1, and 99 standard deviations of the z-axis detection values normalized to the range of 0 to 1 may include the same 99 standard deviations as input values.

In other words, the processor 431 may include 99 feature values for the seven types of features as input values, which will be described in detail below with reference to FIG. 7.

Referring to FIG. 7, the x-axis represents seven types of features (the x-axis detection value, the y-axis detection value, the z-axis detection value, the standard deviation of the x-axis detection value, the standard deviation of the y-axis detection value, the standard deviation of the z-axis detection value, and {(x-axis detection value)²+(y-axis detection value)²+(z-axis detection value)²}^{1/2} obtained by the sensor 440) according to each section, and the y-axis represents a normalized feature value. At this time, a white dot represents a feature value obtained by the sensor 440 when there is no proximity movement of the object, and a black dot represents a feature value obtained by the sensor 440 when there is a proximity movement of the object.

Referring to FIG. 7, it may be confirmed that, as for the feature value in the x-axis detection value section S1, the y-axis detection value section S2, and the z-axis detection value section S3, a maximum value is increased, a minimum value is reduced, and values distributed near the average are more densely distributed when there is a proximity movement of the object, in comparison with when there is no proximity movement of the object.

In other words, it may be confirmed that when there is the proximity movement of the object, the standard deviation of the feature value obtained by the sensor 440 becomes smaller than when there is no proximity movement of the object. The feature may also be confirmed through the feature values of the standard deviation section S4 of the x-axis detection value, the standard deviation section S5 of the y-axis detection value, and the standard deviation section S6 of the z-axis detection value.

Accordingly, it may be confirmed that the standard deviation of the detection values of each axis obtained by the sensor 440 may be used as an input value in training the machine learning model 600 to determine whether the proximity movement of the object occurs.

According to one embodiment, the processor 431 may utilize the standard deviation of the detection values of each axis (x-axis/y-axis/z-axis) as an input value of the machine learning model 600, thereby utilizing a distribution degree (or distribution shape) of the detection values to train the machine learning model 600.

Accordingly, even when the normalization is performed, it is possible to reduce the error caused by a change in the distribution location of the detection values on each axis due to the difference in the minimum and maximum values of the feature values due to outliers.

In addition, the processor 431 uses Root Sum Square (RSS) of the x-axis detection value, the y-axis detection value, and the z-axis detection value, i.e. {(x-axis detection value)²+(y-axis detection value)²+(z-axis detection value)²}^{1/2} as input values of the machine learning model 600. Accordingly, the processor 431 may use the distribution degree (or distribution shape) of the overall acceleration sensor values regardless of the axis for the machine learning to determine the proximity movement of the object, thereby reducing errors due to the operation environment and/or installation environment of the sensor 440.

When the input value is input to the machine learning model 600, the processor 431 may train the machine learning model 600 to determine whether the proximity movement of the object occurs as the input value passes through third layer.

At this time, the input value may be a 1X693 matrix including 99 feature values for each of the seven types of features based on the detection value of the sensor 440 when the proximity movement the object occurs in the electronic device 10 or when the proximity movement the object does not occur in the electronic device 10. At this time, when the proximity movement of the object does not occur, a value may be input as 0 (zero), and when the proximity movement of the object does not occur, a value may be input as 1.

The machine learning model 600 may include a plurality of predetermined layers (e.g., L1, L2, and L3 of FIG. 6). A matrix corresponding to each layer may be predetermined and stored in the memory 432.

The processor 431 may process data obtained from the sensor 440 through the machine learning model 600 to determine whether the proximity movement of the object occurs.

That is, the processor 431 may perform matrix multiplication in each layer based on a predetermined matrix stored in the memory 432 and process an input value based on a detection value of the sensor 440 to determine whether the proximity movement of the object occurs.

The processor 431 may determine whether the proximity movement of the object occurs based on whether an output value output while passing through a plurality of layers exceeds a threshold value. As for the output value output while passing through the plurality of layers, when it is assumed that when the proximity movement of the object does not occur, a value is input as 0 (zero) and when the proximity movement of the object occurs, a value is input as 1, the value may be output as a value that is greater than or equal to 0 but is less than or equal to 1.

For example, the threshold value that is predetermined and stored in the memory 432 may be 0.5. Accordingly, when the output value output through the plurality of layers L1, L2 and L3 of the machine learning model 600 exceeds 0.5, it may be determined that the proximity movement of the object occurs.

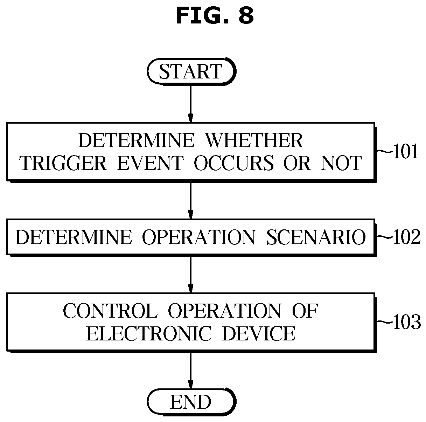

FIG. 8 is a control flowchart of the electronic device 10 according to one embodiment.

According to one embodiment, the electronic device 10 may perform a mirroring operation of an external device (e.g., another IoT device 301 or the user device 2) corresponding to each operation scenario.

The processor 431 may determine whether a trigger event, which is for the electronic device 10 to initiate the mirroring operation of the external device, occurs (101).

The trigger event may be an event triggers activation of a mirroring function of the electronic device 10, and may include a proximity movement event of an object to the electronic device 10.

The processor 431 may determine an operation scenario of the electronic device 10 based on the occurrence of the trigger event (102).

The processor 431 may determine a corresponding operation scenario based on predetermined factors.

Determining the operation scenario may include selecting one of a plurality of operation scenarios that is predetermined and stored in the memory 432.

The predetermined factors for determining the operation scenario may include the number of occurrences of the trigger event, whether the electronic device 10 includes the display device, or whether there is a history of occurrence of the trigger event in an external device.

The processor 431 may control each component of the electronic device 10 to operate the electronic device 10 based on the identified operation scenario (103).

For example, the processor 431 may control the communication circuit 410 to obtain content information, which is to be mirrored, from an external device (e.g., the user device 2 or the server 308).

In addition, the processor 431 may control the display device 420a to display a screen displayed on the display device of the external device based on the obtained mirroring content information or to perform a function performed by the external device instead.

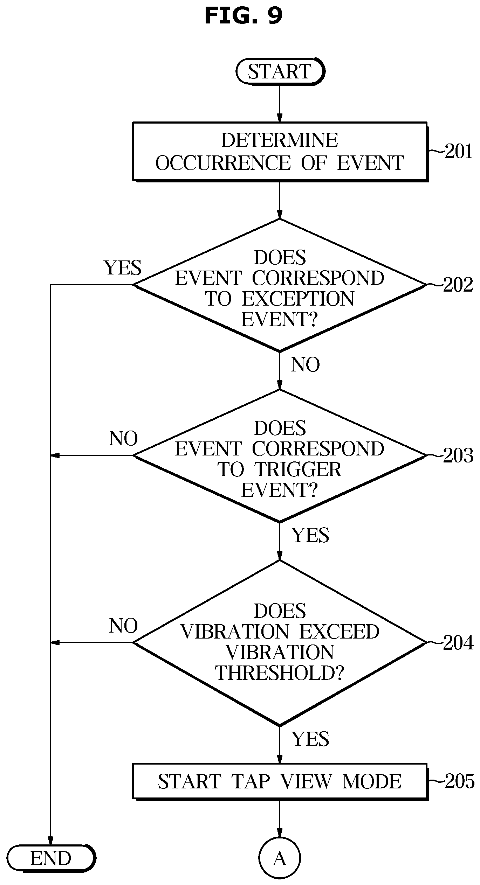

FIG. 9 is a control flowchart of the electronic device 10 for determining whether a trigger event occurs according to one embodiment.

The processor 431 may determine whether a trigger event, which is to initiate a mirroring operation of an external device, occurs.

According to one embodiment, the processor 431 may determine whether the event occurs around the electronic device 10 based on a detection value of the sensor 440 (201).

For example, the processor 431 may determine that the event occurs in response to detecting a change in vibration or acceleration based on data obtained from the sensor 440.

The processor 431 may determine whether the occurred event corresponds to an exception event (202).

The exception event includes an event that is determined by the processor 431 to occur due to a factor other than the proximity movement of the object relative to the electronic device 10.

For example, when a change in vibration or acceleration occurs as the electronic device 10 performs its original function (e.g., when the electronic device 10 is the washing machine 17, the washing machine 17 performs the washing process) as described above with reference to FIG. 5, the processor 431 may determine that the occurred event corresponds to the exception event.

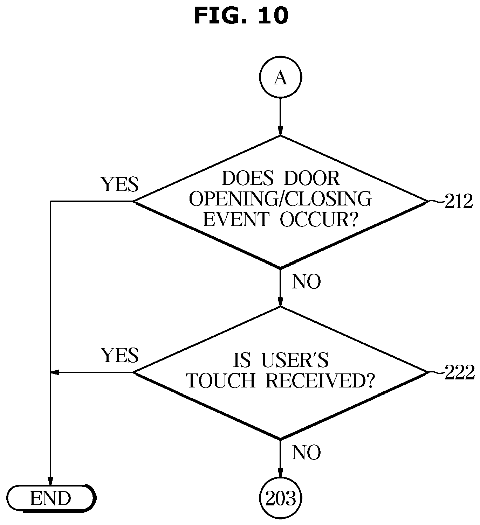

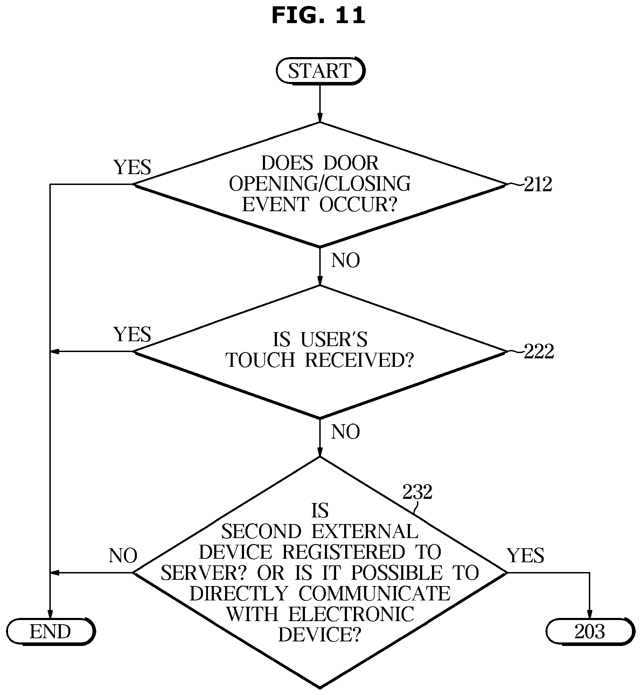

Further, when the object, which is moving in proximity to the electronic device 10, corresponds to an external device, the occurred event due to the operating state or communication connection state of the external device may be determined to correspond to the exception event. Hereinafter a process by which the processor 431 determines whether the event corresponds to the exception event will be described in detail with reference to FIGS. 10 and 11.

The processor 431 may terminate a series of processes without initiating the mirroring operation in response to the detected event corresponding to the exception event (yes in 202).

On the other hand, in response to the detected event not corresponding to the exception event (no in 202), the processor 431 may determine whether the detected event corresponds to the trigger event for initiating the mirroring operation (203).

The trigger event is an event that triggers the activation of the mirroring function of the electronic device 10, and may include an event in which the sensor 440 detects the proximity movement of the object ((i.e., a user or an external device) to the electronic device 10.

For example, the trigger event may include at least one of a proximity movement event of the external device 2 (i.e., the user device 2 of FIG. 1 or another electronic device 10) to the electronic device 10, a proximity movement event of a user to the electronic device 10, or an event in which a user taps the electronic device 10.

At this time, the processor 431 may determine whether the proximity movement of the external device or the user to the electronic device 10 occurs using the seven types of features and the machine learning model 600 based on the detection values obtained by the sensor 440 described above in FIGS. 6 and 7.

The processor 431 may terminate the series of processes without initiating the mirroring operation in response to the detected event not corresponding to the trigger event (no in 202).

In response to the detected event corresponding to the trigger event (yes in 203), the processor 431 may determine whether a vibration of the electronic device 10 exceeds a predetermined vibration threshold (204).

The predetermined vibration threshold may be predetermined and stored in the memory 432 depending on the type or function of the electronic device 10.

The processor 431 may determine whether the vibration of the electronic device 10 exceeds the vibration threshold based on the detection value obtained by the sensor 440.

For example, the processor 431 may identify a vibration level of the electronic device 10 based on acceleration detection values in 3-axis obtained by the sensor 440.

Particularly, by using the seven types of normalized features described above with reference to FIG. 7 to determine whether the vibration threshold is exceeded, errors due to the operation or installation environment of the electronic device 10 may be eliminated.

In response to the vibration of the electronic device 10, which is identified based on the detection value obtained by the sensor 440, being less than or equal to the vibration threshold (no in 204), the processor 431 may terminate a series of processes without initiating the mirroring operation.

In response to the vibration of the electronic device 10, which is identified based on the detection value obtained by the sensor 440, being greater than the vibration threshold (yes in 204), the processor 431 may initiate a TAP VIEW mode for the electronic device 10 to perform mirroring of the external device (205). At this time, the TAP VIEW mode may include an operation in which the processor 431 generates a series of control commands for each component forming the electronic device 10 to allow the electronic device 10 to perform the mirroring function.

FIG. 10 is an example of a control flowchart of the electronic device 10 for determining the exception event according to one embodiment.

According to one embodiment, the processor 431 may determine whether an event occurred around the electronic device 10 is the exception event rather than an event occurred by an object.

The processor 431 may determine whether an opening/closing event of the door of the electronic device 10 occurs (212).

The electronic device 10 may further include a sensor configured to detect the opening and closing of the door. For example, the sensor may include a vibration sensor configured to detect a vibration due to the opening and closing of the door, an acceleration sensor configured to detect changes in acceleration, a Hall sensor configured to detect changes in magnetic flux, or a reed switch configured to transmit or block an electrical signal in response to an external stimulus.

Accordingly, the processor 431 may determine whether a user opens or closes the door based on the detection value obtained from the sensor.

In response to the determination that the opening/closing event occurs (yes in 212), the processor 431 may determine that the vibration or acceleration change detected by the sensor 440 is not caused by the proximity movement of the object, but is caused by the opening/closing of the door. Accordingly, the processor 431 may terminate a series of processes without initiating the mirroring operation.

In response to the determination that the opening/closing event does not occur (no in 212), the processor 431 may determine whether a user touch is received through the user interface 420 (222).

As described above with reference to FIGS. 2 and 3, the user interface 420 may include a touch screen including a touch detection circuit (or touch sensor) (not shown), a pressure sensor configured to measure an intensity of a touch, and/or a touch panel (e.g., a digitizer) configured to detect a stylus pen of a magnetic field type. Accordingly, the processor 431 may determine whether the user's sensory information is received in the form of a user touch through the user interface 420.

In response to the determination that the user touch is received (yes in 222), the processor 431 may determine that the vibration or acceleration change detected by the sensor 440 is not caused by the proximity movement of the object, but is caused by the user touch. Accordingly, the processor 431 may terminate a series of processes without initiating the mirroring operation.

In response to the determination that the user touch is not received (no in 222), the processor 431 may determine that the vibration or the acceleration change detected by the sensor 440 is caused by the proximity movement of the object. Accordingly, the processor 431 may determine that the occurred event does not correspond to the exception event (i.e. no in 202 of FIG. 9) and determine whether the occurred event corresponds to the trigger event for initiating the TAP VIEW mode (i.e. 203 of FIG. 9).

That is, the processor 431 may not activate the TAP VIEW mode when a change in vibration or acceleration detected by the sensor 440 is caused by a vibration generated by the electronic device 10 itself, such as when the door opening/closing event occurs or when a user touch is received through the user interface 420.

In the above description, the case in which the processor 431 determines whether an event occurred due to a predetermined condition detected in the electronic device 10 itself corresponds to the exception event has been described. Hereinafter a case in which the exception event is determined by an external device will be described with reference to FIG. 11.

FIG. 11 is another example of the control flowchart of the electronic device 10 for determining the exception event according to one embodiment.

According to one embodiment, the processor 431 may not activate the TAP VIEW mode in response to a change in vibration or acceleration detected by the sensor 440 being caused by a vibration generated by the electronic device 10 itself. The case in which vibration is generated by the electronic device 10 itself may include a case in which the door opening/closing event occurs (212) or a case in which a user touch is received through the user interface 420 (222), as described above with reference to FIG. 10.

In addition, even when the door opening/closing event does not occur (212) and the user touch is not received through the user interface 420 (222), the processor 431 may determine whether an event occurred around the electronic device 10 corresponds to the exception event based on information on an external device that allows the event to occur.

The processor 431 may determine whether the external device corresponds to a device registered to the server 308 or whether the external device is allowed to directly communicate with the electronic device 10 based on mirroring information on the external device (232).

Particularly, the processor 431 may determine whether the external device corresponds to a device registered to the server 308 and whether the electronic device 10 is allowed to transmit and receive data through the server for performing the mirroring function of the external device.

When the external device is a device registered to the server 308, the electronic device 10 may transmit and receive data with the external device through the server 308. Accordingly, the processor 431 may determine that an event occurred around the electronic device 10 is not the exception event (i.e., no in 202 of FIG. 9) and determine whether the occurred event corresponds to the trigger event for initiating the TAP VIEW mode (i.e., 203 of FIG. 9).

In addition, when the electronic device 10 and the external device are allowed to communicate directly, data may be transmitted and received in a device-to-device (D2D) manner without passing through the server, and accordingly, the electronic device 10 may mirror the external device and display a mirroring content.

Communication between the electronic device 10 and the external device may be performed by at least one of Bluetooth (IEEE 802.15.1), Zigbee (IEEE 802.15.4), Wi-Fi Direct, Near Field Communication (NFC), and Z-Wave.

Accordingly, in response to the external device being allowed to directly communicate with the electronic device 10 (yes in 242), the processor 431 may determine that an event occurred around the electronic device 10 is not the exception event (i.e., no in 202 of FIG. 9) and determine whether the occurred event corresponds to the trigger event for initiating the TAP VIEW mode (i.e., 203 of FIG. 9).

In response to the external device being allowed to directly communicate with the electronic device 10 (no in 202), the processor 431 may determine that the event occurred around the electronic device 10 corresponds to the exception event (i.e., no in 202 of FIG. 9) and may terminate a series of processes without initiating the mirroring operation.

As described above, in order for the electronic device 10 to display a mirroring content by mirroring the external device, communication with at least one of the server or the external device is required, and a series of data transmission and reception processes are required to display the mirroring content.

When the electronic device 10 and the external device are allowed to communicate directly (i.e., when the electronic device 10 and the external device are paired), data may be transmitted and received through the device-to-device communication.

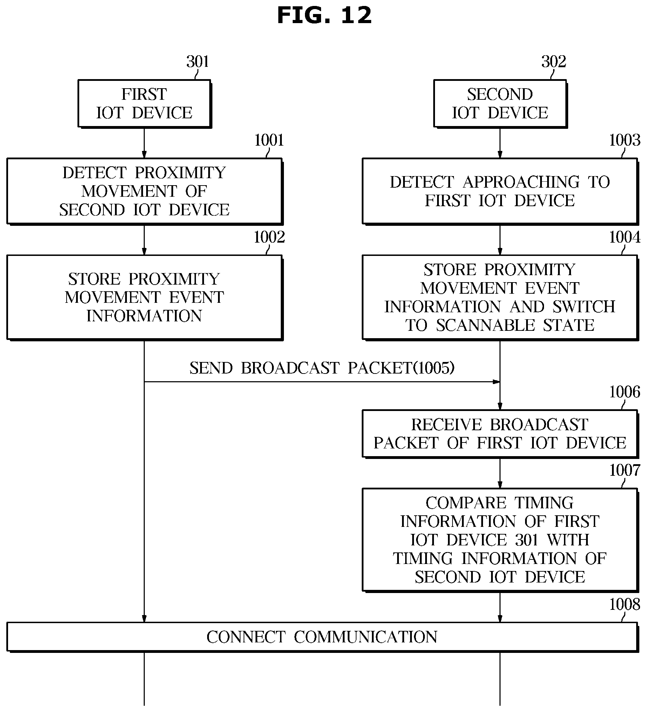

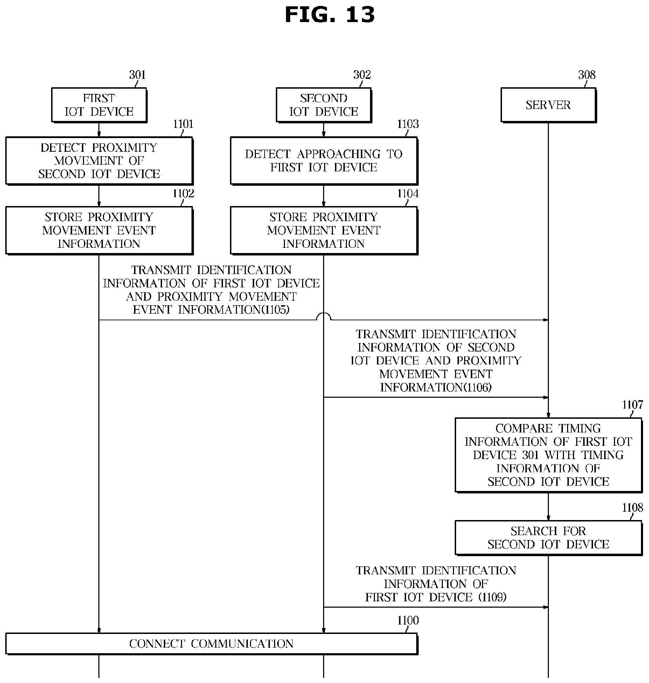

When the electronic device 10 and the external device are not paired and the direct communication is not allowed (e.g., the external device of FIG. 10 is a device registered to the server 308 but is not directly paired with the electronic device, i.e., yes in 232 of FIG. 10), the electronic device 10 needs to perform a direct or indirect communication connection with the external device, which will be described below with reference to FIGS. 12 and 13.

FIG. 12 is a diagram illustrating an example of a process for performing a communication connection between IoT devices according to one embodiment.

Referring to FIG. 12, the first IoT device 301 may correspond to the electronic device 10 or the user device 2 of FIG. 1, and the second IoT device 302 may correspond to another electronic device 10 except the first IoT device 301 or the user device 2.

For example, the first IoT device 301 may be the refrigerator 11 of FIG. 1, and the second IoT device 302 may be the user device 2 of FIG. 1.

According to one embodiment, the first IoT device 301 may detect a proximity movement of the second IoT device 302 based on a detection value of the sensor 440 (1001), determine that a proximity movement event of the second IoT device 302 occurs, and store proximity movement event information (1002).

The proximity movement event information may include information on the occurrence of the proximity movement of the second IoT device 302 toward the first IoT device 301, and information on a time taken for the second IoT device 302 to move in proximity a predetermined distance (hereinafter referred to as "timing information").

At the same time, the second IoT device 302 may also detect the approach of the first IoT device 302 based on the detection value of the sensor 440 (1003), and determine that a proximity movement event occurs toward the first IoT device 302 and store proximity movement event information (1004).

The proximity movement event information may include information on whether the proximity movement of the second IoT device 302 to the first IoT device 301 occurs, and information on a time taken for the second IoT device 302 to move in proximity a predetermined distance (hereinafter referred to as "timing information").

Further, the second IoT device 302 may switch to a scannable state based on the detection of the proximity of the first IoT device 301 (1004). The scannable state may include a state in which the second IoT device 302 may identify an external device (e.g., the first IoT device 301) in which a communication connection state is activated through scanning.

The first IoT device 301 may activate a communication connection standby state based on the detection of the proximity movement of the second IoT device 302.

For example, the first IoT device 301 may periodically send a broadcast packet via Bluetooth Low Energy (BLE) Advertising (1005).

The broadcast packet may include Universally Unique Identifier (UUID), service information, and/or data of the first IoT device 301 of the electronic device 10. In addition, the Universally Unique Identifier (UUID), service information, and/or data that the broadcast packet may include may be coupled with proximity movement event information and transmitted to an external device through the broadcast packet.

Further, the broadcast packet may include information on a service or profile of the first IoT device 301. For example, the broadcast packet may include whether an audio output service is provided or whether a heart rate measurement service is provided.

Further, the broadcast packet may include whether the first IoT device 301 supports the TAP VIEW mode service for mirroring of an external device.

In the present disclosure, it has been described as an example that the first IoT device 301 periodically transmits the broadcast packet through Bluetooth Low Energy (BLE) Advertising, but this is merely an example. The first IoT device 301 may also transmit the broadcast packet to an external device through a separate device that functions as a router or access point.

The second IoT device 302 may receive the broadcast packet from the first IoT device 301 as the second IoT device 302 switches to the scannable state (1006).

Accordingly, the second IoT device 302 may obtain timing information of the first IoT device 301 by decoding the received broadcast packet.

The second IoT device 302 may compare the obtained timing information of the first IoT device 301 with the timing information of the second IoT device 302 (1007).

Particularly, the second IoT device 302 may determine whether a device approached by the second IoT device 302 corresponds to the first IoT device 301 by comparing the timing information of the first IoT device 301 with the timing information of the second IoT device 302. For example, when the timing information of the first IoT device 301 and the timing information of the second IoT device 302 are the same, a device moving close to the first IoT device 301 may be the first IoT device 301, and thus it is possible to identify a device that should perform a communication connection based on the timing information.

Accordingly, in response to the determination that the device approached by the second IoT device 302 corresponds to the first IoT device 301 after the second IoT device 302 compares the timing information, the first IoT device 301 and the second IoT device 302 may perform the communication connection (1008).

For example, in response to the first IoT device 301 being identified, the second IoT device 302 may request the communication connection based on identification information or predetermined password information, and the first IoT device 301 that receives the communication connection request may connect the communication with the second IoT device 302 based on the received identification information or predetermined password information.

The connected communication may be one of Wi-Fi communication, Bluetooth communication, low-power Bluetooth communication, and/or Zigbee communication.

Thereafter, the first IoT device 301 and the second IoT device 302 may transmit and receive data including information for mirroring through the connected communication.

FIG. 13 is a diagram illustrating another example of a process for performing a communication connection between IoT devices according to one embodiment.

Referring to FIG. 13, the first IoT device 301 may correspond to the electronic device 10 or the user device 2 of FIG. 1, and the second IoT device 302 may correspond to another electronic device 10 except the first IoT device 301 or the user device 2.

For example, the first IoT device 301 may be the refrigerator 11 of FIG. 1, and the second IoT device 302 may be the user device 2 of FIG. 1.

According to one embodiment, the first IoT device 301 and the second IoT device 302 may perform the communication connection via the server 308.

According to one embodiment, the first IoT device 301 may detect a proximity movement of the second IoT device 302 based on a detection value of the sensor 440 (1101), determine that a proximity movement event of the second IoT device 302 occurs, and store proximity movement event information (1102).

The proximity movement event information may include information on the occurrence of the proximity movement of the second IoT device 302 toward the first IoT device 301, and information on a time taken for the second IoT device 302 to move in proximity a predetermined distance (hereinafter referred to as "timing information").

At the same time, the second IoT device 302 may also detect the approach to the first IoT device 302 based on the detection value of the sensor 440 (1103), and the second IoT device 302 may determine that the proximity movement event occurs toward the first IoT device 302 and store proximity movement event information (1004).

The proximity movement event information may include information on whether the proximity movement of the second IoT device 302 to the first IoT device 301 occurs, and information on a time taken for the second IoT device 302 to move in proximity a predetermined distance (hereinafter referred to as "timing information").

The first IoT device 301 may generate a data packet including identification information of the first IoT device and proximity movement event information coupled with the identification information of the first IoT device based on the detection of the proximity movement of the second IoT device 302, and transmit the generated data packet to the server 308 to which the first IoT device 301 is registered (1105).

The second IoT device 302 may also generate a data packet including identification information of the second IoT device and proximity movement event information coupled with the identification information of the second IoT device based on the detection of the approach to the first IoT device 301, and transmit the generated data packet to the server 308 to which the second IoT device 302 is registered (1106).

The server 308 may obtain information on the first IoT device 301 and the second IoT device 302 by decoding the data packet received from the first IoT device 301 and the data packet received from the second IoT device 302.

The server 308 may compare the timing information of the first IoT device 301 with the timing information of the second IoT device 302 based on the timing information coupled with the identification information of the first IoT device 301 or the identification information of the second IoT device 302 (1107).

That is, the server 308 may determine whether a device approached by the second IoT device 302 corresponds to the first IoT device 301 by comparing the timing information of the first IoT device 301 with the timing information of the second IoT device 302. For example, when the timing information of the first IoT device 301 and the timing information of the second IoT device 302 are the same, a device moving close to the first IoT device 301 may be the first IoT device 301, and thus it is possible to identify devices that should perform a communication connection based on the timing information.

Accordingly, the server 308 may search for the first IoT device 301 and the second IoT device 302 based on the identification information of the first IoT device 301 and the identification information of the second IoT device 302 coupled with each timing information (1108).

The server 308 may transmit the identification information on the first IoT device 301 to the searched second IoT device 302 (1109).

Accordingly, the second IoT device 302 may identify the first IoT device 301 based on the received identification information on the first IoT device 301 and perform the communication connection with the first IoT device 301 (1110).

For example, in response to the first IoT device 301 being identified, the second IoT device 302 may request the communication connection based on identification information or predetermined password information, and the first IoT device 301 that receives the communication connection request may connect the communication with the second IoT device 302 based on the received identification information or predetermined password information.

The connected communication may be one of Wi-Fi communication, Bluetooth communication, low-power Bluetooth communication, and/or Zigbee communication.

Thereafter, the first IoT device 301 and the second IoT device 302 may transmit and receive data including information for mirroring through the connected communication.

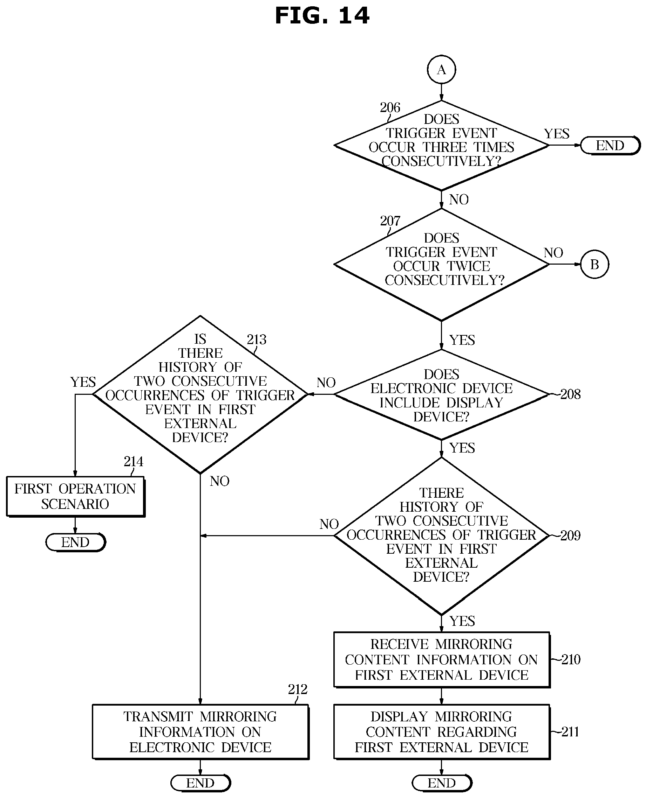

FIG. 14 is an example of a control flowchart for determining an operation scenario of the electronic device 10 after a TAP VIEW mode is initiated according to one embodiment.

According to one embodiment, the processor 431 may determine an operation scenario of the electronic device 10 after the TAP VIEW mode is initiated based on the determination that the trigger event occurs.

The processor 431 may determine at least one factor to determine the operation scenario.

According to one embodiment, the processor 431 may determine at least one of the number of consecutive occurrences of the trigger event, whether the electronic device 10 includes the display device 420b, or whether there is a history of two consecutive occurrences of the trigger event in an external device, as at least one factor to determine the operation scenario.

The processor 431 may determine the number of times that the trigger event occurs consecutively in the electronic device 10. At this time, the consecutive occurrence of the trigger event may include the occurrence of the trigger event by the same or different objects. For example, the trigger event may occur twice consecutively by the user device 2, or the first trigger event may occur by the user device 2 and the second trigger event may occur by a user tapping the electronic device 10.

Particularly, the processor 431 may determine whether the trigger event occurs three times consecutively in the electronic device 10 (206). In response to the trigger event occurring three times consecutively (yes in 206), the processor 431 may terminate the TAP VIEW mode. On the other hand, in response to the trigger event not occurring three times consecutively (no in 206), the processor 431 may determine whether the number of consecutive occurrences of the trigger event is one time or two times (207).

In response to the determination that the number of consecutive occurrences of the trigger event is two times (yes in 207), the processor 431 may display a mirroring content on the display device 420b through mirroring to the first external device or transmit mirroring information on the electronic device 10 to the external device or the server 308 to allow the electronic device 10 to be mirrored by the external device.

Particularly, in response to the determination that two consecutive trigger events occur (yes in 207), the processor 431 may determine whether the electronic device 10 includes the display device 420b (208).

In response to the electronic device 10 including the display device 420b (yes in 208), the processor 431 may determine whether there is a history of two consecutive occurrences of the trigger event in the first external device 701 (209).

That is, in response to the electronic device 10 including the display device 420b, the processor 431 may receive a mirroring content, and display the content of the external device by mirroring the content of the external device through the display device 420b of the electronic device 10.

In response to the electronic device 10 including the display device 420b (yes in 208), the processor 431 may determine whether there is a history of two consecutive occurrences of the trigger event in the first external device 701 (209).

At this time, the first external device 701 may correspond to an external device determined to be moving in proximity to the electronic device 10 based on a detection value detected by the sensor 440. When there is a plurality of external devices determined to be moving in proximity to the electronic device 10 based on the detection value detected by the sensor 440, the first electronic device 701 may correspond to one of the plurality of external devices.

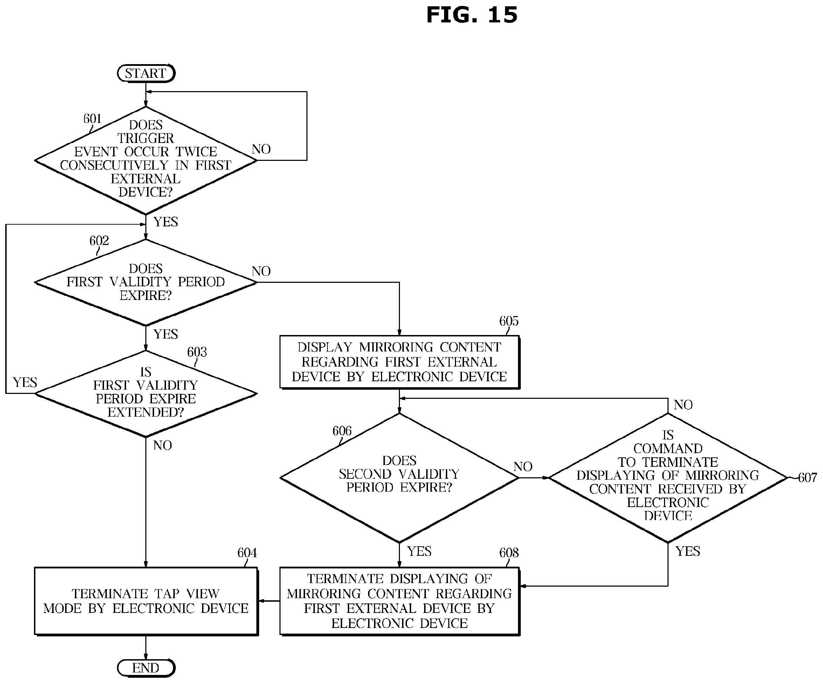

The processor 431 may determine whether there is a history of two consecutive occurrences of the trigger event in the first external device 701 based on mirroring information on the first external device 701 received through communication with the server 308 or at least one external device. At this time, the at least one external device may include a device except the first external device 701 moving in proximity to the electronic device 10. A data transmission and reception method for obtaining mirroring information will be described below with reference to FIGS. 15 to 21.

Mirroring information on the first external device 701 may include identification information on the first external device 701 or mirroring content information on a content displayed on the display device 420b as the first electronic device 701 is mirrored.

Communication connection between the electronic device 10 and the server 308 or the at least one external device may be performed by the method described above in FIGS. 12 and 13.

In response to the determination that there is a history of two consecutive occurrences of the trigger event in the first external device 701 (yes in 209), the processor 431 may receive mirroring content information on the first external device 701 through the communication connection with the server 308 or the at least one external device (210). At this time, when the received mirroring information, which is for determining whether there is a history of two consecutive occurrences of the trigger event in the first external device 701, includes content information on the first external device 701, the reception of the mirroring content (210) may be omitted.

Accordingly, the processor 431 may control the display device 420b to display the mirroring content based on the received mirroring content information on the first external device 701 (211).

In response to the determination that there is no history of two consecutive occurrences of the trigger event in the first external device 701 (no in 209), the processor 431 may transmit mirroring information on the electronic device 10 to the server 308 or the at least one external device (212).

That is, in response to the determination that there is no history of two consecutive occurrences of the trigger event in the first external device 701, the processor 431 may determine that there is no external device to be mirrored. Accordingly, the processor 431 may control the communication circuit 410 to transmit mirroring information, which is for the electronic device 10 to be mirrored by another external device, to the server or the at least one external device, with the two consecutive occurrences of the trigger event in the electronic device 10 as a predetermined condition.

In response to the electronic device 10 not including the display device 420b (no in 208), the processor 431 may determine whether there is a history of two consecutive occurrences of the trigger event in the first external device 701 (213).

In response to the determination that there is no history of two consecutive occurrences of the trigger event in the first external device 701 (no in 213), the processor 431 may transmit mirroring information on the electronic device 10 to the server 308 or the at least one external device (212).

That is, in response to the determination that there is no history of two consecutive occurrences of the trigger event in the first external device 701, the processor 431 may determine that there is no external device to be mirrored. Accordingly, the processor 431 may control the communication circuit 410 to transmit mirroring information, which is for the electronic device 10 to be mirrored by another external device, to the server or the at least one external device, with the two consecutive occurrences of the trigger event in the electronic device 10 as a predetermined condition.

On the other hand, in response to the determination that there is a history of two consecutive occurrences of the trigger event in the first external device 701 (yes in 213), the processor 431 may control the electronic device 10 to operate according to the predetermined first operation scenario (214).

That is, in order to display a mirroring content by mirroring the first external device 701 in a state in which two consecutive trigger events occur in the first external device 701, the electronic device 10, in which two consecutive trigger events are determined to occur, must include the display device 420b. However, when the electronic device 10, in which two consecutive trigger events are determined to occur in the state in which two consecutive trigger events occur in the first external device 701, does not include the display device 420b, the electronic device 10 may perform an operation based on a predetermined first operation scenario.

According to the predetermined first operation scenario, the processor 431 may control the electronic device 10 to invalidate both the two consecutive occurrences of the trigger event in the first external device 701 and the two consecutive occurrences of the trigger event in the electronic device 10, and to terminate the TAP VIEW mode. In addition, the processor 431 may generate a control command to cause the second external device 702 (e.g., the user device 2) to provide a TAP VIEW mode termination notification to a user, and transmit the control command to the second external device 702. At this time, communication between the electronic device 10 and the second external device 702 may be performed by any of the communication methods described above.

In addition, the processor 431 may generate a control command to invalidate only the two consecutive occurrences of the trigger event in the electronic device 10 and to allow the second external device 702 to provide a first instruction notification to a user, and transmit the control command to the second external device 702. At this time, the first instruction notification may include a notification that allows the trigger event to occur in another electronic device 10 including the display device 420b. Particularly, the first instruction notification may include a notification that allows the trigger event to occur twice consecutively in another electronic device 10 including the display device 420b.

Further, the processor 431 may invalidate only the two consecutive occurrences of the trigger event in the first external device 701 and determine that the two consecutive trigger events occur only in the electronic device 10, thereby transmitting mirroring information on the electronic device 10 to the server 308 or the at least one external device (i.e., the transmission of the mirroring information (212)).

That is, in response to the determination that there is no history of two consecutive occurrences of the trigger event in the first external device 701, the processor 431 may determine that there is no external device to be mirrored. Accordingly, the processor 431 may control the communication circuit 410 to transmit mirroring information, which is for the electronic device 10 to be mirrored by another external device, to the server or the at least one external device, with the two consecutive occurrences of the trigger event in the electronic device 10 as a predetermined condition.

FIG. 15 is a control flowchart for determining a validity period of a history of two consecutive occurrences of a trigger event in the external device and a validity period of displaying a mirroring content in the electronic device 10 according to one embodiment.

According to one embodiment, in order for the electronic device 10 to display a mirroring content on the first external device 701 by mirroring the first external device 701, it is required that the trigger event occur twice consecutively in the electronic device 10 including the display device 420b in a state in which the two consecutive occurrences of the trigger event in the first external device 701 remains valid. Accordingly, the processor 431 of the electronic device 10 needs to determine whether the two consecutive occurrences of the trigger event in the first external device 701 is valid.

According to one embodiment, the processor 431 may determine whether two consecutive trigger events occur in the first external device 701 based on mirroring information on the first external device 701 received from the server 308 or the external device (601).

In response to the determination that the two consecutive trigger events occur in the first external device 701 (yes in 601), the processor 431 may determine whether a first validity period expires (602).

The first validity period is a predetermined period, and may include a period from a time when the electronic device 10 starts to detect the proximity movement of the first external device 701 until the predetermined time elapses. The first validity period may be predetermined and stored in the memory 432 according to at least one of the type or performance of the electronic device 10 or the first external device 701.

In addition, the processor 431 may determine the first validity period based on the position of the electronic device 10 and the first electronic device 701. For example, the processor 431 may determine the first validity period to be relatively short when the electronic device 10 and the first external device 701 are likely to be in the same space, such as when the electronic device 10 and the first external device 701 are a cooking appliance and a refrigerator, respectively. In addition, when the processor 431 receives information on the positions of the electronic device 10 and the first electronic device 701 from the server 308, the first validity period may be determined based on the position information.

Further, the electronic device 10 may determine or change the predetermined first validity period based on a user input received through the input interface 420a.

In response to the determination that the first validity period expires (yes in 602), the processor 431 may determine whether to extend the first validity period (603).

For example, the processor 431 may determine whether to extend the first validity period based on a user input received through the input interface 420a. In addition, the processor 431 may determine whether a predetermined first validity period extension condition is satisfied, and in response to the satisfaction of the predetermined first validity period extension condition, the processor 431 may determine whether to extend the first validity period.

The processor 431 may terminate the TAP VIEW mode (604) in response to the non-extension of the first validity period (no in 603). In addition, the processor 431 may transmit a control command to the second electronic device 702 (e.g., the user device 2) to provide a user with a notification regarding the termination of the TAP VIEW mode. Accordingly, the second electronic device 702 may output a notification regarding the termination of the TAP VIEW mode based on the control command received from the electronic device 10.

In response to the determination that the first validity period does not expire (no in 602) or in response to the extension of the first validity period (yes in 603), the processor 431 may determine that there is a history of the two consecutive occurrences of the trigger event that is valid in the first external device 701, and control the display device 420b to display the mirroring content based on the received mirroring content information on the first external device 701 (605) in the same manner as the operation (210 of FIG. 14).

According to one embodiment, the processor 431 may control the display device 420b to display the mirroring content related to the first external device 701, and then determine whether a second validity period expires (606).

The second validity period may be a predetermined period, and may include a period from a time when the mirroring content regarding the first external device 701 starts to be displayed until the predetermined time elapses. The second validity period may be predetermined and stored in the memory 432 according to at least one of the type or performance of the electronic device 10 or the first external device 701.

In response to the determination the second validity period expires (yes in 606), the processor 431 may control the display device 420b to prevent the electronic device 10 from displaying the mirroring content regarding the first external device (608).

In response to the determination that the second validity period does not expire (no in 606), the processor 431 may determine whether a command to terminate displaying of the mirroring content on the first electronic device 701 is received from a user through the input interface 420a (607). For example, the user command to terminate displaying of the mirroring content may include a user touch received by the input interface 420a implemented as a touch screen.

In response to the command to terminate displaying of the mirroring content on the first electronic device 701 not being received from the user (no in 607), the processor 431 may control the display device 420b to display the mirroring content on the first external device 701 until the predetermined first validity period expires.

On the other hand, in response to the command to terminate displaying of the mirroring content on the first electronic device 701 being received from the user (yes in 607), the processor 431 may control the display device 420b to prevent the electronic device 10 from displaying the mirroring content on the first external device 701 even before the predetermined first validity period expires (608).

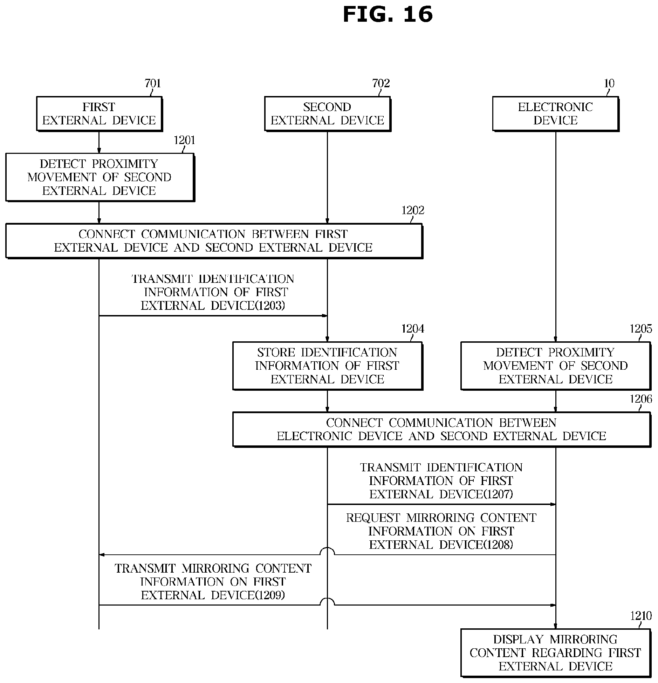

FIGS. 16 to 21 are diagrams illustrating a process in which the electronic device 10 transmits and receives data with external devices to display a mirroring content regarding the first external device 701 according to one embodiment.

Referring to FIGS. 16 to 21, the first external device 701 and the second external device 702 may be IoT devices except the electronic device 10 and may correspond to separate devices. For example, when the electronic device 10 corresponds to the refrigerator 11, the first external device 701 may correspond to the electric range 13, and the second electronic device 702 may correspond to the user device 2.

Referring to FIG. 16, the electronic device 10 may receive identification information on the first electronic device 701 from the second external device 702 and directly request mirroring content information to the first electronic device 701.

According to one embodiment, based on the detection of the proximity movement of the second external device 702 (1201), the first external device 701 may perform a communication connection between the first external device 701 and the second external device 702 (1202). At this time, the communication connection between the first external device 701 and the second external device 702 may be performed by a series of operations described with reference to FIGS. 12 and 13, and the communication connected between the first external device 701 and the second external device 702 may be one of Wi-Fi communication, Bluetooth communication, low-power Bluetooth communication, and/or Zigbee communication.

The first external device 701 may transmit the identification information of the first external device to the second external device 702 via the connected communication (1203). Accordingly, the second external device 702 may store the identification information of the first external device 701 (1204).

In response to the proximity movement of the second external device 702 occurring in the electronic device 10, the electronic device 10 may detect the proximity movement of the second external device 701 (1205).

Accordingly, the electronic device 10 may perform a communication connection between the electronic device 10 and the second external device 702 based on the detection of the proximity movement of the second external device 702 (1206). At this time, the communication connection between the electronic device 10 and the second external device 702 may be performed by a series of operations described with reference to FIGS. 12 and 13, and the communication connected between the electronic device 10 and the second external device 702 may be one of Wi-Fi communication, Bluetooth communication, low-power Bluetooth communication, and/ or Zigbee communication.

In response to the communication connection between the electronic device 10 and the second external device 702, the second external device 702 may transmit the identification information of the first external device 701, which is received from the first external device 701 and stored, to the electronic device 10 (1207).

Accordingly, based on the received identification information of the first external device 701, the electronic device 10 may request mirroring content information on the first external device 701 to the first external device 701 (1208).

The first external device 701 that receives the request of the mirroring content information on the first external device 701 from the electronic device 10 may transmit the mirroring content information on the first external device 701 to the electronic device 10 (1209).

The electronic device 10 that receives the mirroring content information on the first external device 701 from the first external device 701 may control the display device 420b to display the mirroring content on the first external device 701 based on the received mirroring content information (1210).

That is, as the electronic device 10 and the first external device 701 exchange information via the second external device 702, the electronic device 10 may display the mirroring content on the first external device 701.

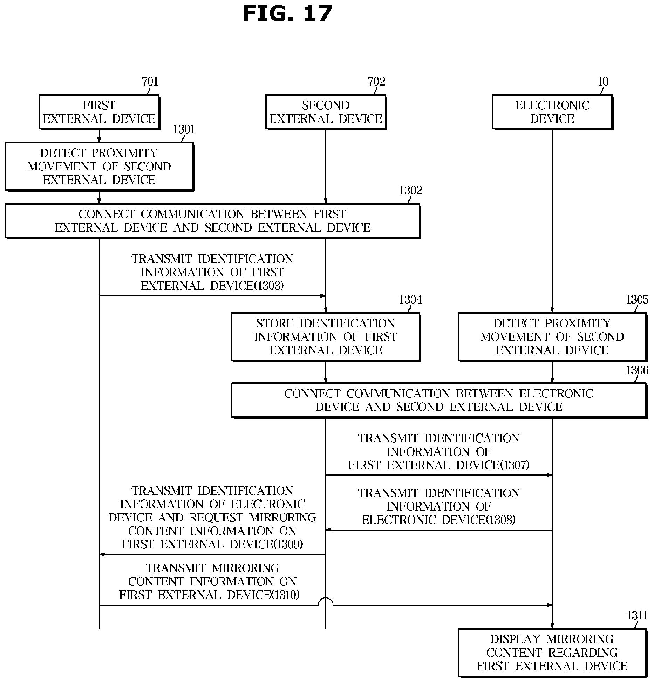

Unlike FIG. 16, the electronic device 10 may transmit identification information thereof to the second external device 702 to allow the second external device 702 to transmit mirroring content information on the first external device 701 to the electronic device 10, which will be described below with reference to FIG. 17.

Referring to FIG. 17, according to one embodiment, based on the detection of the proximity movement of the second external device 702 (1301), the first external device 701 may perform a communication connection between the first external device 701 and the second external device 702 (1302). At this time, the communication connection between the first external device 701 and the second external device 702 may be performed by a series of operations described with reference to FIGS. 12 and 13, and the communication connected between the first external device 701 and the second external device 702 may be one of Wi-Fi communication, Bluetooth communication, low-power Bluetooth communication, and/or Zigbee communication.

The first external device 701 may transmit the identification information of the first external device to the second external device 702 via the connected communication (1203). Accordingly, the second external device 702 may store the identification information of the first external device 701 (1304).

In response to the proximity movement of the second external device 702 occurring in the electronic device 10, the electronic device 10 may detect the proximity movement of the second external device 701 (1305).

Accordingly, the electronic device 10 may perform a communication connection between the electronic device 10 and the second external device 702 based on the detection of the proximity movement of the second external device 702 (1306). At this time, the communication connection between the electronic device 10 and the second external device 702 may be performed by a series of operations described with reference to FIGS. 12 and 13, and the communication connected between the electronic device 10 and the second external device 702 may be one of Wi-Fi communication, Bluetooth communication, low-power Bluetooth communication, and/ or Zigbee communication.

In response to the communication connection between the electronic device 10 and the second external device 702, the second external device 702 may transmit the identification information of the first external device 701, which is received from the first external device 701 and stored, to the electronic device 10 (1307).

The electronic device 10 may transmit identification information of the electronic device 10 to the second external device 702 based on receiving the identification information of the first external device 701 from the second external device 702 (1308).

The second external device 702 may couple the identification information of the electronic device 10 received from the electronic device 10 with a mirroring content information request signal regarding the first external device 701 and transmit the coupled information to the second external device 702 (1309).

Accordingly, the first external device 701 may transmit mirroring content information on the first external device 701 to the electronic device 10 based on the received identification information of the electronic device 10 (1310).

Based on receiving the mirroring content information on the first external device 701 from the first external device 701, the electronic device 10 may control the display device 420b to display a mirroring content regarding the first external device 701 (1310).

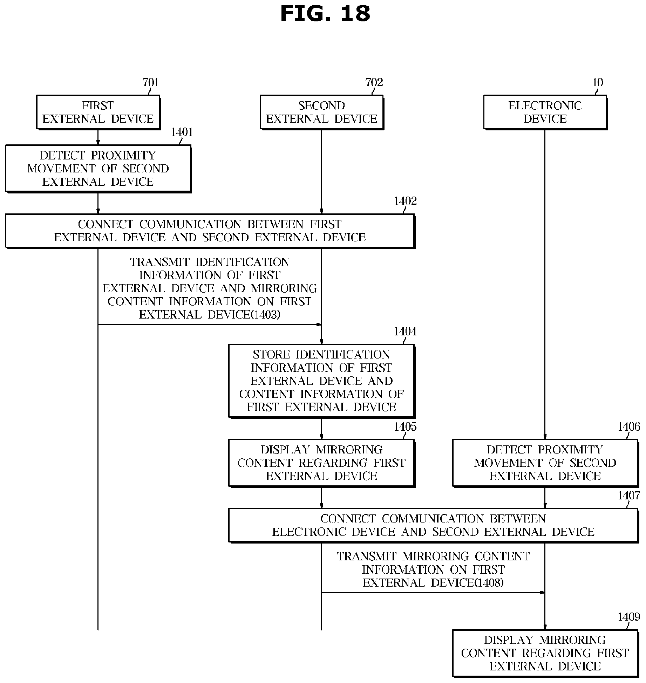

In the above description, FIG. 16 and FIG. 17 illustrate the data transmission and reception process in which the identification information of the first external device 701 and the mirroring content information on the first external device 701 are sequentially transmitted from the first external device 701. Hereinafter with reference to FIG. 18, a method in which the identification information of the first external device 701 and the mirroring content information on the first external device 701 are sequentially transmitted from the first external device 701 will be described.

Referring to FIG. 18, according to one embodiment, based on the detection of the proximity movement of the second external device 702 (1401), the first external device 701 may perform a communication connection between the first external device 701 and the second external device 702 (1402). At this time, the communication connection between the first external device 701 and the second external device 702 may be performed by a series of operations described with reference to FIGS. 12 and 13, and the communication connected between the first external device 701 and the second external device 702 may be one of Wi-Fi communication, Bluetooth communication, low-power Bluetooth communication, and/or Zigbee communication.

The first external device 701 may simultaneously transmit identification information of the first external device 701 and mirroring content information of the first external device 701 to the second external device 702 via the connected communication (1403).

Accordingly, the second external device 702 may store the identification information of the first external device 701 and the mirroring content information of the first external device 701 (1304).

In addition, the second external device 702 may also display a mirroring content by mirroring the first external device 701 based on the mirroring content information of the first external device 701 (1405).

In response to the proximity movement of the second external device 702 occurring in the electronic device 10, the electronic device 10 may also detect the proximity movement of the second external device 701 (1406).

Accordingly, the electronic device 10 may perform a communication connection between the electronic device 10 and the second external device 702 based on the detection of the proximity movement of the second external device 702 (1407). At this time, the communication connection between the electronic device 10 and the second external device 702 may be performed by a series of operations described with reference to FIGS. 12 and 13, and the communication connected between the electronic device 10 and the second external device 702 may be one of Wi-Fi communication, Bluetooth communication, low-power Bluetooth communication, and/ or Zigbee communication.

In response to the communication connection between the electronic device 10 and the second external device 702, the second external device 702 may transmit the stored identification information of the first external device 701 to the electronic device 10 (1408).

Based on receiving the mirroring content information on the first external device 701 from the first external device 701, the electronic device 10 may control the display device 420b to display a mirroring content regarding the first external device 701 (1409).

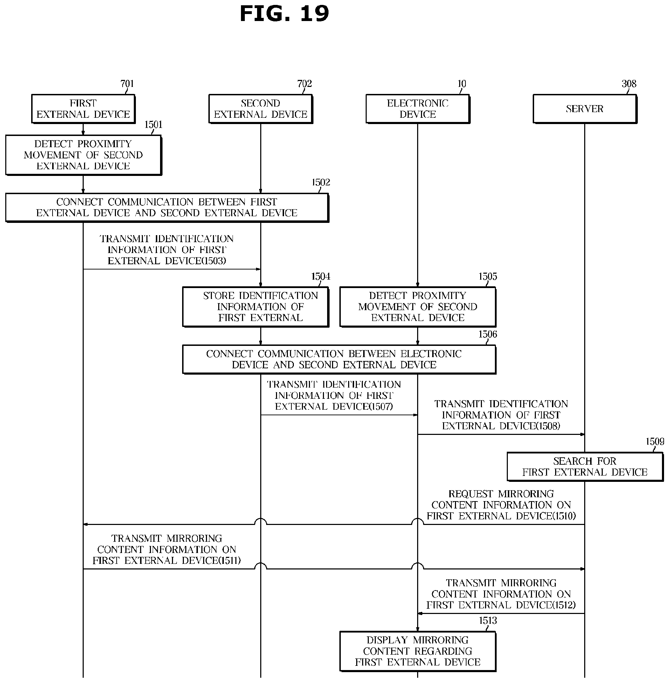

Referring to FIG. 19, the server 308 may be involved in the process in which of the electronic device 10 transmits and receives data with external devices to display the mirroring content regarding the first external device 701.

According to one embodiment, based on the detection of the proximity movement of the second external device 702 (1501), the first external device 701 may perform a communication connection between the first external device 701 and the second external device 702 (1502). At this time, the communication connection between the first external device 701 and the second external device 702 may be performed by a series of operations described with reference to FIGS. 12 and 13, and the communication connected between the first external device 701 and the second external device 702 may be one of Wi-Fi communication, Bluetooth communication, low-power Bluetooth communication, and/or Zigbee communication.

The first external device 701 may transmit the identification information of the first external device to the second external device 702 via the connected communication (1503). Accordingly, the second external device 702 may store the identification information of the first external device 701 (1504).

In response to the proximity movement of the second external device 702 occurring in the electronic device 10, the electronic device 10 may detect the proximity movement of the second external device 701 (1505).

Accordingly, the electronic device 10 may perform a communication connection between the electronic device 10 and the second external device 702 based on the detection of the proximity movement of the second external device 702 (1506). At this time, the communication connection between the electronic device 10 and the second external device 702 may be performed by a series of operations described with reference to FIGS. 12 and 13, and the communication connected between the electronic device 10 and the second external device 702 may be one of Wi-Fi communication, Bluetooth communication, low-power Bluetooth communication, and/ or Zigbee communication.

In response to the communication connection between the electronic device 10 and the second external device 702, the second external device 702 may transmit the identification information of the first external device 701, which is received from the first external device 701 and stored, to the electronic device 10 (1507).

The electronic device 10 may transmit the identification information on the first external device 701, which is received from the second external device 702, to the server 308 (1508).

Accordingly, the server 308 may search for the first external device 701 among the devices registered to the server 308 based on the identification information on the first external device 701 received from the electronic device 10 (1509).

In response to the first external device 701 being searched, the server 308 may request mirroring content information on the first external device 701 to the first external device 701 (1510).

The first external device 701 that receives the request of the mirroring content information on the first external device 701 from the server 308 may transmit the mirroring content information on the first external device 701 to the server 308 (1511).

The server 308 that receives the mirroring content information from the first external device 701 may transmit the information to the electronic device (1512), and the electronic device 10 that receives the mirroring content information on the first external device 701 from the server 308 may control the display device 420b to display a mirroring content on the first external device 701 based on the received mirroring content information (1513).

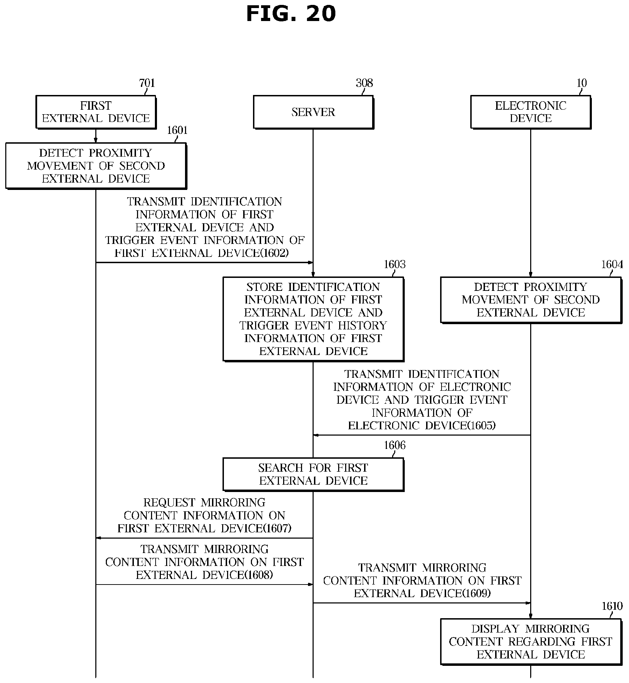

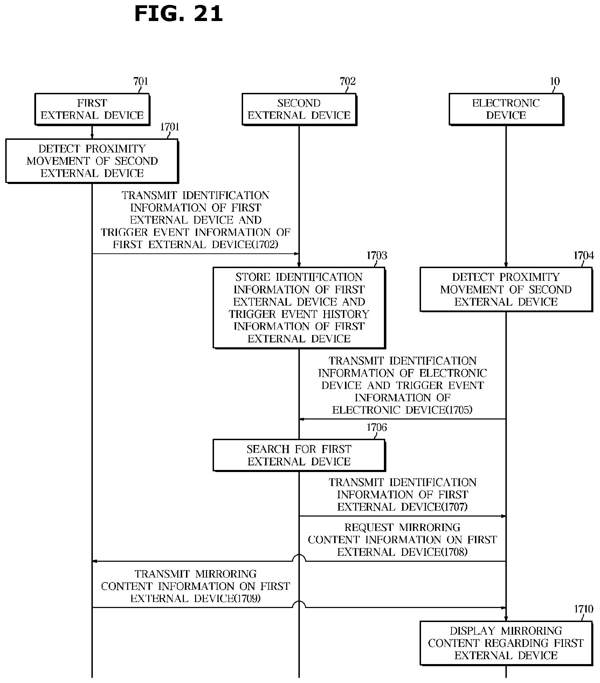

In the above description, the method for transmitting and receiving the mirroring information including the identification information of the first electronic device 701 or the mirroring content information of the first electronic device 701 via the second electronic device 702 has been described. However, in the process of transmitting and receiving data for the electronic device 10 to display the mirroring content regarding the first electronic device 701, the second electronic device 702 may not be involved, which will be described below with reference to FIGS. 20 and 21.

Referring to FIG. 20, based on the detection of the proximity movement of the second external device 702 (1601), the first external device 701 may couple identification information of the first external device 701 and trigger event information of the first external device 701 and transmit the coupled information to the server 308 (1602). At this time, the server 308 may be a server to which the first external device 701 is registered.

The trigger event information may include information on whether the trigger event occurs, the number of occurrences of the trigger event, or the time of the trigger event. For example, when the trigger event includes the occurrence of the proximity movement of the second external device 702 toward the first external device 701, the trigger event information may include the fact that the proximity movement of the second external device 702 toward the first external device 701 occurs and information on a time taken for the second external device 702 to move in proximity a predetermined distance (hereinafter referred to as "timing information").

Accordingly, the server 308 may couple the identification information of the first external device 701 and the trigger event information of the first external device 701 and store the coupled information (1603).

Based on the detection of the proximity movement of the second external device 702 (1604), the electronic device 10 may couple the identification information of the electronic device 10 and the trigger event information of the electronic device 10 and transmit the coupled information to the server 308 (1605). At this time, the server 308 may be a server to which the electronic device 10 is registered.

The trigger event information may include information on whether the trigger event occurs, the number of occurrences of the trigger event, or the time of the trigger event. For example, when the trigger event includes the occurrence of the proximity movement of the second external device 702 toward the electronic device 10, the trigger event information may include the fact that the proximity movement of the second external device 702 toward the electronic device 10 occurs and timing information on a time taken for the second external device 702 to move in proximity a predetermined distance.

The server 308 may obtain identification information of the first external device, which is coupled with trigger event information corresponding to trigger event information of the electronic device 10, based on the identification information of the electronic device 10 and the trigger event information coupled with the identification information of the electronic device 10, and may search for the first external device based on the identification information of the first external device 701 (1606). For example, when a device approaching to the electronic device 10 and a device approaching to the first electronic device 701 is the same as the second external device 702, the server 308 may determine that the electronic device 10 and the first electronic device 701 include the same trigger event information.

In response to the first external device 701 being searched, the server 308 may request mirroring content information on the first external device 701 to the first external device 701 (1607).

Accordingly, the first external device 701 may transmit the mirroring content information on the first external device 701 to the server 308 (1608), and the server 308 may transmit the received mirroring content information on the first external device 701 to the electronic device 10 (1609).

Accordingly, the electronic device 10 may control the display device 420b to display a mirroring content regarding the first external device 701 based on the mirroring content information on the first external device 701 (1611).

That is, according to the series of data transmission and reception processes described above with reference to FIG. 20, the first external device 701 and the electronic device 10 may exchange data via the server 308 without the intervention of the second electronic device 701.

Hereinafter a method for directly exchanging data between the first external device 701 and the electronic device 10 without intervention of the server 308 as well as the second electronic device 701 will be described with reference to FIG. 21.

Referring to FIG. 21, based on the detection of the proximity movement of the second external device 702 (1701), the first external device 701 may couple identification information of the first external device 701 and trigger event information of the first external device 701 and transmit the coupled information to the server 308 (1702). At this time, the server 308 may be a server to which the first external device 701 is registered.

The trigger event information may include information on whether the trigger event occurs, the number of occurrences of the trigger event, or the time of the trigger event. For example, when the trigger event includes the occurrence of the proximity movement of the second external device 702 toward the first external device 701, the trigger event information may include the fact that the proximity movement of the second external device 702 toward the first external device 701 occurs and timing information on a time taken for the second external device 702 to move in proximity a predetermined distance.

Accordingly, the server 308 may couple the identification information of the first external device 701 and the trigger event information of the first external device 701 and store the coupled information (1703).

Based on the detection of the proximity movement of the second external device 702 (1704), the electronic device 10 may couple the identification information of the electronic device 10 and the trigger event information of the electronic device 10 and transmit the coupled information to the server 308 (1705). At this time, the server 308 may be a server to which the electronic device 10 is registered.

The trigger event information may include information on whether the trigger event occurs, the number of occurrences of the trigger event, or the time of the trigger event. For example, when the trigger event includes the occurrence of the proximity movement of the second external device 702 toward the electronic device 10, the trigger event information may include the fact that the proximity movement of the second external device 702 toward the electronic device 10 occurs and timing information on a time taken for the second external device 702 to move in proximity a predetermined distance.

The server 308 may obtain identification information of the first external device, which is coupled to trigger event information corresponding to trigger event information of the electronic device 10, based on the identification information of the electronic device 10 and the trigger event information coupled to the identification information of the electronic device 10, and may search for the first external device based on the identification information of the first external device 701 (1706). For example, when a device approaching to the electronic device 10 and a device approaching to the first electronic device 701 is the same as the second external device 702, the server 308 may determine that the electronic device 10 and the first electronic device 701 include the same trigger event information.

In response to the first external device 701 being searched, the server 308 may request mirroring content information on the first external device 701 to the electronic device 10 (1707). Accordingly, the electronic device 10 may request a mirroring content regarding the first external device 701 based on the identification information on the first external device 701 (1708).

Accordingly, the first external device 701 may directly transmit the mirroring content information on the first external device 701 to the electronic device 10 (1709), and the electronic device 10 may control the display device 420b to display a mirroring content regarding the first external device 701 based on the received mirroring content information on the first external device 701 (1710).

In other words, the first external device 701 and the electronic device 10 may directly exchange data in a device-to-device (d2d) manner without the intervention of the second electronic device 701 or the server 308.

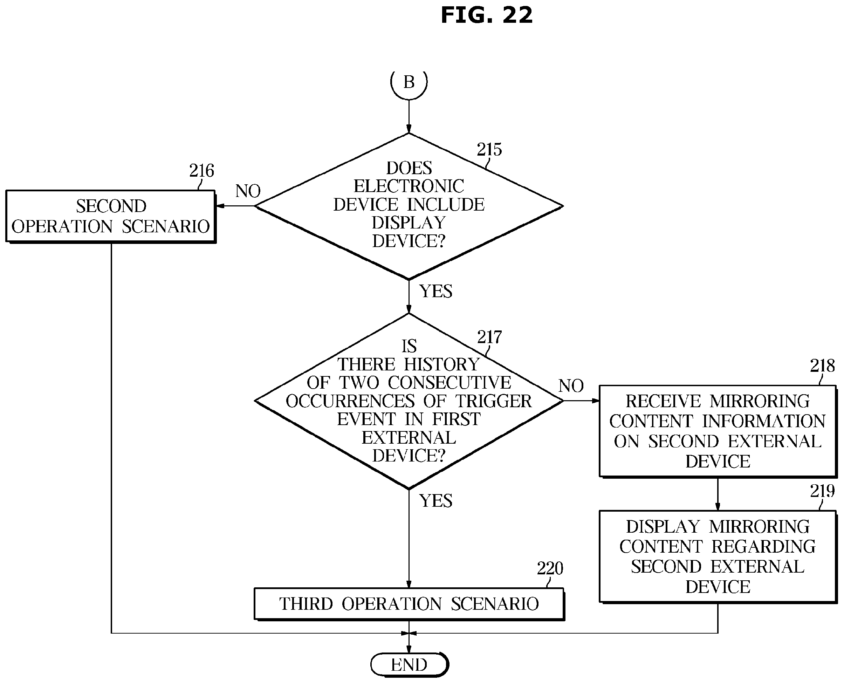

FIG. 22 is another example of a control flowchart for determining an operation scenario of the electronic device after the TAP VIEW mode is initiated according to one embodiment.

In response to the determination that the number of consecutive occurrences of the trigger event is one time not two times (no in 207), the processor 431 may display a mirroring content on the display device 420b through mirroring to the second external device or transmit mirroring information on the electronic device 10 to the external device or the server 308 to allow the electronic device 10 to be mirrored by the external device.

Particularly, in response to the determination that a single trigger event occurs (no in 207), the processor 431 may determine whether the electronic device 10 includes the display device 420b (215).

In response to the electronic device 10 not including the display device 420b (no in 215), the processor 431 may control the electronic device 10 to operate according to a predetermined second operation scenario (216).

In order for the electronic device 10 to mirror the external device and display a mirroring content, the electronic device 10 needs to include the display device 420b. However, when the electronic device 10, in which a single trigger event is determined to occur, does not include the display device 420b, the electronic device 10 may perform an operation based on the predetermined second operation scenario.

According to the predetermined second operation scenario, the processor 431 may terminate the TAP VIEW mode and terminate the entire process.

In addition, the processor 431 may generate a control command to allow the second external device 702 (e.g., the user device 2) to provide a notification to a user to terminate the TAP VIEW mode, and transmit the control command to the second external device 702. At this time, communication between the electronic device 10 and the second external device 702 may be performed by any of the communication methods described above.

In response to the electronic device 10 including the display device 420b (yes in 215), the processor 431 may determine whether there is a history of two consecutive occurrences of the trigger event in the first external device 701 (217).

At this time, the first external device 701 may correspond to an external device determined to be moving in proximity to the electronic device 10 based on a detection value detected by the sensor 440. When there is a plurality of external devices determined to be moving in proximity to the electronic device 10 based on the detection value detected by the sensor 440, the first electronic device 701 may correspond to one of the plurality of external devices.

The processor 431 may determine whether there is a history of two consecutive occurrences of the trigger event in the first external device 701 based on mirroring information on the first external device 701 received through the communication with the server 308 or at least one external device. At this time, the at least one external device may include a device except the first external device 701 moving in proximity to the electronic device 10. A data transmission and reception method for obtaining mirroring information will be described below with reference to FIGS. 15 to 21.

The mirroring information on the first external device 701 may include identification information on the first external device 701 or mirroring content information on a content displayed on the display device 420b as the first electronic device 701 is mirrored.

At this time, communication connection between the electronic device 10 and the server 308 or at least one external device may be performed by the method described above in FIGS. 12 and 13.

In response to the determination that there is no history of two consecutive occurrences of the trigger event in the first external device 701 (no in 2017), the processor 431 may receive mirroring content information on the second external device 702 through the communication connection with the server 308 or at least one external device (218). The mirroring information on the second external device 702 may include identification information on the second electronic device 702 or mirroring content information on a content displayed on the display device 420b as the second electronic device 702 is mirrored.

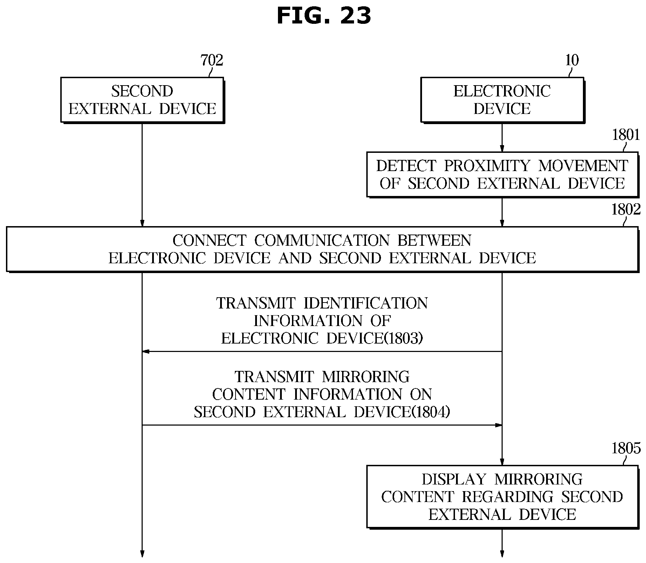

A data transmission and reception method for obtaining the mirroring information on the second external device 702 will be described below with reference to FIG. 23.

Accordingly, the processor 431 may control the display device 420b to display the mirroring content based on the received mirroring content information on the second external device 702 (219).

In response to the determination that there is a history of two consecutive occurrences of the trigger event in the first external device 701 (yes in 217), the processor 431 may control the electronic device 10 to operate according to a predetermined third operation scenario (220).

That is, in order to display the mirroring content by mirroring the first external device 701 in a state in which two consecutive trigger events occur in the first external device 701, it is required that two consecutive trigger events occur in the electronic device 10 on which the mirroring content is displayed. However, when it is determined that a single trigger event occurs in the electronic device 10 in the state in which two consecutive trigger events occur in the first external device 701, the electronic device 10 may perform an operation based on the predetermined third operation scenario.

According to predetermined third operation scenario, the processor 431 may determine that two consecutive trigger events occur in the electronic device 10, and may control the electronic device 10 as if two consecutive trigger events occur in the electronic device 10.

For example, in the same manner as the operations (210 and 211 of FIG. 14), the processor 431 may receive the mirroring content information on the first external device 701 through the communication connection with the server 308 or at least one external device. At this time, when the mirroring information, which is received to determine whether there is a history of two consecutive occurrences of the trigger event in the first external device 701, includes content information on the first external device 701, the operation may be omitted. Accordingly, the processor 431 may control the display device 420b to display the mirroring content based on the received mirroring content information on the first external device 701.

In addition, according to the predetermined third operation scenario, the processor 431 may invalidate both the two consecutive occurrences of the trigger event in the first external device 701 and the occurrence of a single trigger event in the electronic device 10. In addition, the processor may generate a control command to allow the second external device 702 to provide a notification to a user to terminate the TAP VIEW mode and transmit the control command to the second external device 702. At this time, the communication between the electronic device 10 and the second external device 702 may be performed by any of the communication methods described above.

In addition, according to the predetermined third operation scenario, the processor 431 may generate a control command to provide a second instruction notification regarding a user selection to allow a user to select whether to control the electronic device 10 as if two consecutive trigger events occurs in the electronic device 10 or to invalidate both the two consecutive occurrences of the trigger event in the first external device 701 and the occurrence of the single trigger event in the electronic device 10, and the processor 431 may transmit the control command to the second external device 702. At this time, the communication between the electronic device 10 and the second external device 702 may be performed by any of the communication methods described above.

In addition, according to the predetermined third operation scenario, the processor 431 may generate a control command to provide a third instruction notification to a user to allow the occurrence of the single trigger event in the electronic device 10 to be invalidated and to allow the two consecutive occurrences of the trigger event in the electronic device 10 to occur again, and transmit the control command to the second external device 702.

In addition, according to the predetermined third operation scenario, the processor 431 may invalidate the two consecutive occurrences of the trigger event in the first external device 701, determine that the single trigger event occurs in the electronic device 10, and control the operation of the electronic device 10.

For example, in the same manner as the operations (218 and 219 of FIG. 22), the processor 431 may receive mirroring information on the second external device 702 through a communication connection with the server 308 or at least one external device, and may control the display device 420b to display a mirroring content based on the received mirroring content information on the second external device 702.

The mirroring information on the second external device 702 may include identification information on the second electronic device 702 or mirroring content information on a content displayed on the display device 420b as the second electronic device 702 is mirrored.

FIG. 23 is a diagram illustrating a process in which the electronic device 10 transmits and receives data with an external device to display a mirroring content regarding the second external device 702 according to one embodiment.

According to one embodiment, the electronic device 10 may detect the proximity of the second external device 702 based on a detection value of the sensor 440 (1801). At this time, the second external device 702 may be the IoT device 301 except the electronic device 10 or the first external device 701, and may include the user device 2.

The electronic device 10 may perform a communication connection between the electronic device 10 and the second external device 702 based on the detection of the proximity of the second external device 702 (1802). At this time, the communication connection between the electronic device 10 and the second external device 702 may be performed by a series of operations described with reference to FIGS. 12 and 13, and the communication connected between the electronic device 10 and the second external device 702 may be one of Wi-Fi communication, Bluetooth communication, low-power Bluetooth communication, and/ or Zigbee communication.

The electronic device 10 may transmit electronic device identification information to the second external device 702 based on the communication connection with the second external device 702 being established (1803).

The second external device 702 may transmit mirroring content information of the second external device 702 to the electronic device 10 based on receiving identification information of the electronic device 10 from the electronic device 10 (1804).

The electronic device 10 may control the display device 420b to display a mirroring content regarding the second external device 702 based on the mirroring content information of the second external device 702 through the communication circuit 410. Accordingly, the electronic device 10 may perform the function of the second electronic device 702 instead or display the content displayed by the second electronic device 702 as it is.

The electronic device 10 according to the present disclosure may include the sensor 400 configured to detect a movement of at least one of an external device or a user; the communication circuit 410 configured to communicate with at least one of the external device or the server 308; the at least one processor 431 and the memory 432 configured to store at least one operation scenario and one or more instructions. The at least one processor 431 may be configured to identifywhether a trigger event occurs based on a detection value of the sensor; based on identifying that the trigger event has occured, identify an operation scenario form the at least one operation scenario based on at least one of a number of occurrences of the trigger event, identifying whether the electronic device 10 includes a display device, or mirroring information associated with the external device obtained through the communication circuit 410; and control at least one of the communication circuit 410 or the display device 420b based on the identified operation scenario.

The at least one processor 431 may be configured to identify whether an event occurs based on the detection value of the sensor 440, identifywhether the event corresponds to an exception event, and identify whether the event is a trigger event based on identifying that the event not corresponding to the exception event.

The at least one processor 431 may be configured to identify that the event occurs based on the external device or the user being determined to be moving in proximity to the electronic device 10 based on the detection value of the sensor 440.

The at least one processor 431 may be configured to identify that the occurred event corresponds to the exception event based detecting at least one of the occurrence of the opening orclosing event associated with the door of the electronic device 10 or a user touch being received through the user interface 420a.

The electronic device 10 may further include the door, and the user interface 420. The at least one processor 431 may be configured to identify whether the occurred event corresponds to the exception event based on the mirroring information of the external device.

The communication circuit is further configured to communicate with a server, and the at least one processor 431 may be configured to identify whether the external device corresponds to a device registered to the server 308 based on the mirroring information of the external device received through the communication circuit 410, and identify that the occurred event corresponds to the exception event in response to the external device not corresponding to the device registered to the server 308. The mirroring information of the external device may include identification information of the external device.

The at least one processor 431 may be configured to identify whether the external device is allowed to directly communicate with the electronic device 10 based on the mirroring information of the external device received through the communication circuit 410, and configured to identify that the occurred event corresponds to the exception event based on identifying that the external is not being allowed to directly communicate with the electronic device 10.

The at least one processor 431 may be configured to identify whether the trigger event has occurred by inputting feature values associated with a plurality of features, which is based on the detection value of the sensor 440, to the machine learning model 600.

The sensor 440 may include an acceleration sensor configured to detect acceleration due to a proximity movement of the external device or the user. The at least one processor 431 may be configured to identify whether the trigger event has occurred based on at least one of an x-axis detection value, a y-axis detection value, a z-axis detection value, a standard deviation of x-axis detection values, a standard deviation of y-axis detection values, a standard deviation of z-axis detection values, or {(x-axis detection value)²+(y-axis detection value)²+(z-axis detection value)²}^{1/2}, which are normalized values obtained based on the detection value.

The at least one processor 431 may be configured to identify whether a vibration value obtained based on the detection valueexceeds a predetermined vibration threshold based on the identifying that the trigger event has occurred, and identify the operation scenarios from the at least one operation scenario based on the vibration value exceeding the predetermined vibration threshold.

The at least one processor 431 may be configured to control the display device 420b to display a mirroring content corresponding to the first external device based on the mirroring content information associated with the first external device identifying that the trigger event occurs twice consecutively in the electronic device 10, identifying that the electronic device 10 includes the display device 420b, and in response to the determination that there is a history of two consecutive occurrences of the trigger event in the first external device 701. Mirroring information of the external device may include at least one of trigger event history information associated with the first external device, identification information associated with the first external device, or mirroring content information associated with the first external device. The trigger event history information of the first external device may include information on whether there is the trigger event occurrence history in the first external device, and the number of occurrences thereof in response to the presence of the trigger event occurrence history in the first external device.

The at least one processor 431 may be configured to identify a first operation scenario from at least one of operation scenario based on identifying that the trigger event occurs twice consecutively in the electronic device 10, identifying that the electronic device 10 does not include the display device 420b, and identifying that there is a history of two consecutive occurrences of the trigger event in the first external device 701.

Based on the first operation scenario, the at least one processor 431 may be configured to invalidate both the two consecutive occurrences of the trigger event in the first external device and the two consecutive occurrences of the trigger event in the electronic device, and control the communication circuit 410 to transmit a control command to the second external device 702 to allow the second external device 702 to output a termination notification.

Based on the first operation scenario, the at least one processor 431 may be configured to validate the two consecutive occurrences of the trigger event in the first external device and invalidate the two consecutive occurrences of the trigger event in the electronic device 10, and control the communication circuit 410 to transmit a control command to the second external device 702 to allow the second external device to output a first instruction notification. The first instruction notification may include a notification that allows two consecutive trigger events to be occurred in another electronic device including the display device 420b.

The communication circuit is further configured to communicate with a server, and based on the first operation scenario, the at least one processor 431 may be configured to invalidate the two consecutive occurrences of the trigger event in the first external device 701 and validate the two consecutive occurrences of the trigger event in the electronic device 10, and control the communication circuit 401 to transmit the mirroring information of the electronic device 10 to the server or the external device.

The at least one processor 431 may be configured to control the display device 420b to display the mirroring content regarding the second external device 702 based on the mirroring content information of the second external device 702 based on identifying determination that the trigger event occurs once in the electronic device 10, identifying that the electronic device 10 includes the display device 420b, and identifying that there is no history of two consecutive occurrences of the trigger event in the first external device 701.

The mirroring information of the external device may further include identification information of the second external device 702 or the mirroring content information of the second external device 702.

The at least one processor 431 may be configured to identify the second operation scenario from the at least one operation scenario based on identifying that the trigger event occurs once in the electronic device 10, and dentifying that the electronic device 10 does not include the display device 420b.

The at least one processor 431 may be configured to control the communication circuit 410 to transmit a control command to the second external device 702 to allow the second external device 701 to output a termination notification based on the second operation scenario.

The at least one processor 431 may be configured to select the third operation scenario from the at least one operation scenario based on identifying that the trigger event occurs once in the electronic device 10, identifying that the electronic device 10 includes the display device 420b, and identifying that there is a history of two consecutive occurrences of the trigger event in the first external device 701.

Based on the third operation scenario, the at least one processor 431 may be configured to identify that two consecutive trigger events occur in the electronic device 10, and configured to control the display device 420b to display a mirroring content based on the mirroring content information of the first external device 701.

Based on the third operation scenario, the at least one processor 431 may be configured to invalidate both the two consecutive occurrences of the trigger event in the first external device 701 and the occurrence of a single trigger event in the electronic device 10, and control the communication circuit 410 to transmit a control command to the second external device 702 to allow the second external device 702 to output the notification.

Based on the third operation scenario, the at least one processor 431 may be configured to transmit a control command to the second external device 702 to allow the second external device 702 to output a second instruction notification regarding a user's selection in order to receive a selection regarding the operation of the electronic device 10 from the user. Based on the user's selection regarding the operation of the electronic device 10 received from the second external device 702 or the user interface 420 of the electronic device 10, the at least one processor 431 may be configured to identify whether to display a mirroring content based on the mirroring content information of the first external device 701, based on the identifying that the two consecutive trigger events occur in the electronic device 10 or to invalidate both the two consecutive occurrences of the trigger event in the first external device 701 and the occurrence of the single trigger event in the electronic device 10 and to control the communication circuit 410 so as to transmit a control command to the second external device 702 to allow the second external device 702 to output the termination notification.

Based on the third operation scenario, the at least one processor 431 may be configured to validate the two consecutive occurrences of the trigger event in the first external device 701, and invalidate the occurrence of the single trigger event in the electronic device 10 and control the communication circuit 410 to transmit a control command to the second external device 702 to allow the second external device 702 to output a third instruction notification.

The third instruction notification may include a notification that allows two consecutive trigger events to be occurred in the electronic device 10.

Based on the third operation scenario, the at least one processor 431 may be configured to validate the occurrence of the single trigger event in the electronic device 10 and invalidate the two consecutive occurrences of the trigger event in the first external device 701, identify that the single trigger event occurs in the electronic device 10, and control the display device 420b to display a mirroring content regarding the second external device 702 based on the mirroring content information of the second external device 702.

The control method of the electronic device 10 configured to display a mirroring content regarding an external device by mirroring the external device, the control method may include identifying whether a trigger event occurs based on a detection value of the sensor 440, based on the occurrence of the trigger event, identifying an operation scenario from at least one predetermined operation scenario, which are stored in the memory 432, based on at least one of the number of occurrences of the trigger event, whether the electronic device 10 includes the display device 420b, or mirroring information of the external device obtained through the communication circuit 410, and controlling the electronic device 10 to operate based on the operation scenario.

According to one aspect of the present disclosure, the electronic device 10 may accurately identify whether a trigger event for initiating mirroring occurs based on a detection value of the sensor 440.

Further, the electronic device 10 may perform mirroring to an external device based on the occurrence of a predetermined trigger event without user intervention, thereby increasing an effectiveness of a mirroring technology and improving a user experience.

While the present disclosure has been particularly described with reference to exemplary embodiments, it should be understood by those of skilled in the art that various changes in form and details may be made without departing from the spirit and scope of the present disclosure.

Although a few embodiments of the disclosure have been shown and described, it would be appreciated by those skilled in the art that changes may be made in these embodiments without departing from the principles and spirit of the disclosure, the scope of which is defined in the claims and their equivalents.

Meanwhile, the disclosed embodiments may be embodied in the form of a recording medium storing instructions executable by a computer. The instructions may be stored in the form of program code and, when executed by a processor, may generate a program module to perform the operations of the disclosed embodiments. The recording medium may be embodied as a computer-readable recording medium.

The computer- readable recording medium includes all kinds of recording media in which instructions which can be decoded by a computer are stored. For example, there may be a Read Only Memory (ROM), a Random Access Memory (RAM), a magnetic tape, a magnetic disk, a flash memory, and an optical data storage device.

Storage medium readable by machine, may be provided in the form of a non-transitory storage medium. "Non-transitory storage medium" means that the storage medium is a tangible device and does not contain a signal (e.g., electromagnetic wave), and this term includes a case in which data is semi-permanently stored in a storage medium and a case in which data is temporarily stored in a storage medium. For example, "non-transitory storage medium" may include a buffer in which data is temporarily stored.

The method according to the various disclosed embodiments may be provided by being included in a computer program product. Computer program products may be traded between sellers and buyers as commodities. Computer program products are distributed in the form of a device-readable storage medium (e.g., compact disc read only memory (CD-ROM)), or are distributed directly or online (e.g., downloaded or uploaded) between two user devices (e.g., smartphones) through an application store (e.g., Play Store^{™}). In the case of online distribution, at least a portion of the computer program product (e.g., downloadable app) may be temporarily stored or created temporarily in a device-readable storage medium such as the manufacturer's server, the application store's server, or the relay server's memory.

## Claims

1. An electronic device comprising:
a sensor configured to detect a movement of at least one of an external device or a user;
a communication circuit configured to communicate with at least one of the external device;
at least one processor; and
memory configured to store at least one operation scenario and one or more instructions,
wherein the at least one processor is configured to:
identify whether a trigger event occurs based on a detection value of the sensor,
based on identifying that the trigger event has occurred, identify an operation scenario from the at least one operation scenario based on at least one of a number of occurrences of the trigger event, identifying whether the electronic device comprises a display device, or mirroring information associated with the external device obtained through the communication circuit, and
control at least one of the communication circuit or the display device based on the identified operation scenario.

2. The electronic device of claim 1, wherein
the at least one processor is configured to:
identify whether an event occurs based on the detection value of the sensor;
identify whether the event corresponds to an exception event; and
identify whether the event is a trigger event based on identifying that the event does not correspond to the exception event.

3. The electronic device of claim 2, wherein
the at least one processor is configured to identify that the event has occurred based on identifying that the external device or the user being determined to be moving in proximity to the electronic device based on the detection value of the sensor.

4. The electronic device of claim 2, further comprising:
a door; and
a user interface,
wherein the at least one processor is configured to identify that the occurred event corresponds to the exception event based on detecting at least one of the occurrence of an opening or closing event associated with the door of the electronic device or a user touch being received through the user interface.

5. The electronic device of claim 2, wherein
mirroring information of the external device comprises identification information of the external device,
wherein the at least one processor is configured to identify whether the occurred event corresponds to the exception event based on the mirroring information of the external device.

6. The electronic device of claim 5, wherein
the communication circuit is further configured to communicate with a server, and
the at least one processor is configured to:
identify whether the external device corresponds to a device registered to the server based on the mirroring information of the external device received through the communication circuitry; and
identify that the occurred event corresponds to the exception event in response to the external device not corresponding to the device registered to the server.

7. The electronic device of claim 5, wherein
the at least one processor is configured to:
identify whether the external device is allowed to directly communicate with the electronic device based on the mirroring information of the external device received through the communication circuitry;
identify that the occurred event corresponds to the exception event based on identifying that external device is not allowed to directly communicate with the electronic device.

8. The electronic device of claim 1, wherein
the at least one processor is configured to identify whether the trigger event has occurred by inputting feature values associated with a plurality of features, which is based on the detection value of the sensor, to a machine learning model.

9. The electronic device of claim 1, wherein
the sensor comprises an acceleration sensor configured to detect acceleration due to a proximity movement of the external device or the user, and
wherein the at least one processor is configured to identify whether the trigger event has occurred based on at least one of an x-axis detection value, a y-axis detection value, a z-axis detection value, a standard deviation of x-axis detection values, a standard deviation of y-axis detection values, a standard deviation of z-axis detection values, or {(x-axis detection value)²+(y-axis detection value)²+(z-axis detection value)²}^{1/2}, which are normalized values obtained based on the detection value.

10. The electronic device of claim 1, wherein
the at least one processor is configured to:
identify whether a vibration value obtained based on the detection value exceeds a predetermined vibration threshold based on the identifying that the trigger event has occurred; and
identify the operation scenarios from the at least one operation scenario based on the vibration value exceeding the predetermined vibration threshold.

11. The electronic device of claim 1, wherein
mirroring information of the external device comprises at least one of trigger event occurrence history information associated with a first external device, identification information associated with the first external device, or mirroring content information associated with the first external device,
wherein the trigger event history information associated with the first external device comprises information on whether there is the trigger event occurrence history in the first external device, and the number of occurrences thereof in response to the presence of the trigger event occurrence history in the first external device,
wherein the at least one processor is configured to control the display device to display a mirroring content corresponding to the first external device based on the mirroring content information of the first external device in response to identifying that the trigger event occurs twice consecutively in the electronic device, identifying that the electronic device comprises the display device, and identifying that there is a history of two consecutive occurrences of the trigger event in the first external device.

12. The electronic device of claim 11, wherein
the at least one processor configured to identify a first operation scenario from at least one of operation scenario based on identifying that the trigger event occurs twice consecutively in the electronic device, identifying that the electronic device does not comprise the display device, and identifying that there is a history of two consecutive occurrences of the trigger event in the first external device.

13. The electronic device of claim 12, wherein
based on the first operation scenario, the at least one processor is configured to invalidate both the two consecutive occurrences of the trigger event in the first external device and the two consecutive occurrences of the trigger event in the electronic device; and configured to control the communication circuit to transmit a control command to the second external device to allow the second external device to output a termination notification.

14. The electronic device of claim 12, wherein
based on the first operation scenario, the at least one processor is configured to:
validate the two consecutive occurrences of the trigger event in the first external device and invalidate the two consecutive occurrences of the trigger event in the electronic device; and
control the communication circuit to transmit a control command to the second external device to allow the second external device to output a first instruction notification,
wherein the first instruction notification comprises a notification that allows two consecutive trigger events to be occurred in another electronic device comprising a display device.

15. The electronic device of claim 12, wherein
the communication circuit is further configured to communicate with a server
based on the first operation scenario, the at least one processor is configured to:
invalidate the two consecutive occurrences of the trigger event in the first external device and validate the two consecutive occurrences of the trigger event in the electronic device; and
control the communication circuit to transmit the mirroring information of the electronic device to the server or the external device.
